# EUROPÄISCHE PATENTSCHRIFT

(11) **EP 1 801 446 B1**
(45) Veröffentlichungstag und Bekanntmachung des Hinweises auf die Patenterteilung: **14.04.2010**
(21) Anmeldenummer: 07005654.4
(22) Anmeldetag: 01.06.2001
(51) Int. Cl.: F16D 25/10, F16D 25/12, F16D 21/06

(54) **Antriebssystem mit einer Mehrfach-Kupplungseinrichtung, in Kombination mit einer Torsionsschwingungsdämpferanordnung und ggf. einer Elektromaschine**
Drive train system with a multi-clutch device, in combination with a torsion vibration attenuator assembly and possibly an electric motor
Transmission avec un embrayage multiple en association avec un dispositif d'amortissement de vibrations de torsion et, peut-être un moteur électrique

(30) Priorität: 17.07.2000 DE 10034730; 29.03.2001 DE 10115453
(43) Veröffentlichungstag der Anmeldung: 27.06.2007
(62) Teilanmeldung aus: 01112877.4
(73) Patentinhaber: ZF Sachs AG, 97424 Schweinfurt (DE); Volkswagen AG, 38436 Wolfsburg (DE)
(72) Erfinder: Geiger, Martin, 97261 Günterselben (DE); Schierling, Bernhard, 97273 Kürnach (DE); Steiner, Eduard, 97070 Würzburg (DE); Kundermann, Wolfgang, 97422 Schweinfurt (DE); Kraus, Paul, 97464 Niederwerrn (DE)

(56) Entgegenhaltungen:
- EP-A- 0 931 951
- EP-A- 1 052 421
- EP-A- 1 195 537
- WO-A-99/51889
- DE-A1- 10 004 179
- DE-A1- 10 034 730
- DE-A1- 19 821 164
- DE-U1- 9 114 528
- GB-A- 2 191 252
- US-A- 4 966 270

## Beschreibung

Die Erfindung betrifft ein Antriebssystem nach dem Obergriff des Anspruchs 1. Ein solches Antriebssystem ist aus DE-A-198 21 164 bekannt.

Eine weitere Kupplungseinrichtung ist beispielsweise aus der EP 0 931 951 A1 bekannt. Die Kupplungseinrichtung dient zur Verbindung des Antriebs eines Kraftfahrzeugs mit einem mehrstufigen Schaltgetriebe über zwei bevorzugt automatisiert betätigte Reibungskupplungen, wobei jeder dieser beiden Reibungskupplungen jeweils ein Ausrücksystem zugeordnet ist, so dass die beiden Reibungskupplungen unabhängig voneinander ein- oder ausrückbar sind. Eine Kupplungsscheibe einer der beiden Reibungskupplungen ist auf einer zentralen Getriebeeingangswelle drehfest angeordnet, während eine Kupplungsscheibe der anderen Reibungskupplung an einer die zentrale Getriebeeingangswelle umgreifenden, als Hohlwelle ausgebildeten zweiten Getriebeeingangswelle drehfest angreift. Die bekannte Doppelkupplung ist mit einer festen Druckplatte der einen Reibungskupplung an einem Schwungrad einer Brennkraftmaschine angeordnet. Die Anordnung der Doppelkupplung in einem Antriebsstrang entspricht insoweit weitgehend der Anordnung herkömmlicher (Einfach-) Reibungskupplungen im Antriebsstrang.

Doppelkupplungseinrichtungen (kurz: Doppelkupplungen) der eingangs genannten Art haben in jüngerer Zeit ein größeres Interesse gefunden und bestehen im Allgemeinen aus zwei nass- oder trockenlaufenden Kupplungen, die wechselseitig - ggf. auch mit Überschneidungen - geschaltet werden. Insbesondere im Zusammenhang mit einem mehrstufigen Schaltgetriebe bieten derartige Kupplungen die Möglichkeit, Schaltvorgänge zwischen jeweils zwei Übersetzungsstufen des Getriebes ohne Zugkraftunterbrechung vorzunehmen.

Doppelkupplungseinrichtungen bieten prinzipiell die Möglichkeit, bei besonders schwierigen, speziell im Rennsport üblichen Anfahrvorgängen beide Kupplungen gemeinsam zu beaufschlagen. Hierzu kann einerseits das Fahrpedal ggf. bis zum Anschlag ausgelenkt werden, während gleichzeitig das Kraftfahrzeug unter Aufwendung der maximalen Bremskraft so lange im Wesentlichen im Stillstand gehalten wird, bis die Kupplung ihren optimalen Übertragungspunkt erreicht hat. Wenn im Augenblick des Erreichens des optimalen Übertragungspunkts die Bremswirkung aufgehoben wird, wird das Fahrzeug mit maximaler Beschleunigung anfahren. Derartige Anfahrvorgänge kommen auch für Kraftfahrzeuge mit relativ schwacher Motorisierung, also nicht nur im Rennsport, unter extremen Anfahrbedingungen in Betracht, beispielsweise zum Anfahren an einem Hindernis.

Eine Kombination aus einer Elektromaschine und einer Torsionsschwingungsdämpferanordnung ist beispielsweise aus der DE 199 14 376 A1 bekannt. Bei dem bekannten System ist die Torsionsschwingungsdämpferanordnung derart ausgebildet, dass sie entweder gemeinsam mit der Trägeranordnung für den Rotorwechselwirkungsbereich durch Schraubbolzen oder dergleichen an einer Antriebswelle angeschraubt ist oder dass eine Seite von Primärseite und Sekundärseite mit der Trägeranordnung zur gemeinsamen Drehung verkoppelt ist, bzw. über diese dann mit der Antriebswelle drehfest verbunden ist. Daraus resultiert der Aufbau, der relativ viel Bauraum beansprucht, was jedoch insbesondere bei der Integration derartiger Antriebssysteme in einen Antriebsstrang bei kleinen Kraftfahrzeugen zu Schwierigkeiten führt. Dies gilt umso mehr, wenn das System umfassend die Elektromaschine und die Torsionsschwingungsdämpferanordnung in Kombination mit einer Mehrfach-Kupplungseinrichtung anstelle einer normalen Einfach-Kupplungseinrichtung vorgesehen wird.

In Weiterbildung des angesprochenen Antriebssystems werden nachfolgend verschiedene Ausgestaltungen des Antriebssystems (umfassend die Mehrfach-Kupplungseinrichtung und die Elektromaschine oder umfassend die Mehrfach-Kupplungseinrichtung und die Torsionsschwingungsdämpferanordnung oder umfassend die Mehrfach-Kupplungseinrichtung, die Elektromaschine und die Torsionsschwingungsdämpferanordnung) vorgeschlagen, die unter anderem eine vergleichsweise einfache Montage des Antriebssystems im Antriebsstrang, eine Optimierung der Schwingungsbedämpfung von im Drehbetrieb auftretenden Schwingungsanregungen und die Verringerung des beanspruchten Bauraums betreffen.

Für eine einfache Eingliederung des Antriebssystems in einen Antriebsstrang ist erfindungsgemäß ein Antriebssystem nach Anspruch 1 vorgesehen, wobei das Antriebssystem ein einer Antriebseinheit zugeordnetes erstes Teilsystem und ein einem Getriebe zugeordnetes zweites Teilsystem aufweist, wobei zur Eingliederung des Antriebssystems in einen Antriebsstrang zwischen der Antriebseinheit und dem Getriebe das Getriebe mit dem daran angeordneten ersten Teilsystem und die Antriebseinheit mit dem daran angeordnetem zweiten Teilsystem unter Verkopplung der beiden Teilsysteme zusammenfügbar sind. Man wird hierzu in der Regel vorsehen, dass zur Eingliederung des Antriebssystems in einen Antriebsstrang zwischen einer Antriebseinheit und einem Getriebe zuerst das erste Teilsystem an der Antriebseinheit anmontierbar und das zweite Teilsystem am Getriebe anmontierbar sind und dass dann das Getriebe und die Antriebseinheit unter Verkopplung der beiden Teilsysteme zusammenfügbar sind.

Die Verkopplung der beiden Teilsysteme wird erfindungsgemäß dadurch besonders einfach, dass das erste Teilsystem ein erstes Koppelglied und das zweite Teilsystem ein zweites Koppelglied aufweist, die jeweils mit einer Mitnahmeformation ausgeführt sind, die durch im wesentlichen axiale Relativbewegung bezogen auf eine den Teilsystemen gemeinsame Achse in gegenseitigen Drehmitnahmeeingriff bringbar sind zur Verkoppelung der beiden Teilsysteme beim Zusammenfügen des Getriebes und der Antriebseinheit. Die Mitnahmeformationen können als Innenverzahnung und Außenverzahnung ausgeführt sein.

Das erste Teilsystem weißt erfindungsgemäß die Torsionsschwingungsdämpferanordnung und das zweite Teilsystem die Mehrfach-Kupplungseinrichtung auf. Es kann ein Anlasserzahnkranz vorgesehen sein, der dem ersten oder dem zweiten Teilsystem zugeordnet sein kann.

Für alle angesprochenen Varianten ist erfindungsgemäß für eine möglichst einfache Montage vorgesehen, dass beide Teilsysteme als jeweilige vormontierte Einheit an der Antriebseinheit bzw. dem Getriebe anmontierbar sind.
Generell wird vorgeschlagen, dass der Rotorwechselwirkungsbereich durch eine Trägeranordnung zur gemeinsamen Drehung mit der der Eingangsseite zugeordneten Komponente gekoppelt oder koppelbar ist. Die Mehrfach-Kupplungseinrichtung kann eine einer ersten Getriebeeingangswelle eines Getriebes des Antriebsstrangs zugeordnete erste Kupplungsanordnung und eine einer zweiten Getriebeeingangswelle des Getriebes zugeordnete zweite Kupplungsanordnung aufweisen zur Momentenübertragung zwischen der Antriebseinheit und dem Getriebe. Vorzugsweise ist von den Getriebeeingangswellen wenigstens eine als Hohlwelle ausgebildet und es verläuft eine der Getriebeeingangswellen durch die andere, als Hohlwelle ausgebildete Getriebeeingangswelle. Die Kupplungsanordnungen sind vorzugsweise als (in der Regel nasslaufende) Lamellen-Kupplungsanordnungen ausgebildet. Für eine optimale Ausnutzung des Bauraums ist es zweckmäßig, wenn eine radial äußere Kupplungsanordnung der Lamellen-Kupplungsanordnungen eine radial innere Kupplungsanordnung der Lamellen-Kupplungsanordnungen ringartig umschließt.

Weitere Ausführungsmöglichkeiten bzw. Weiterbildungsmöglichkeiten für das Antriebssystem betreffend die Mehrfach-Kupplungseinrichtung können den deutschen Patentanmeldungen DE 100 04 179 A1, DE 100 04 186 A1, DE 100 04 189 A1, DE 100 04 190 A1 und DE 100 04 195 A1 entnommen werden, wobei insbesondere auf die jeweiligen Ansprüche und die Diskussion der Ansprüche der jeweiligen Beschreibungseinleitung verwiesen wird. Die Mehrfach-Kupplungseinrichtung kann ferner entsprechend den Vorschlägen des ersten Erfindungsaspekts ausgeführt sein.

Vor allem im Hinblick auf eine Verringerung des vom Antriebssystem beanspruchten Bauraums wird vorgeschlagen, dass das Antriebssystem wenigstens ein Bauteil aufweist, welches funktionsmäßig oder/und strukturell oder/und zumindest bereichsweise räumlich in wenigstens zwei von der Mehrfach-Kupplungseinrichtung, der Torsionsschwingungsdämpferanordnung und der Elektromaschine (soweit vorhanden) integriert ist.

Betreffend die Kombination aus der Elektromaschine und der Torsionsschwingungsdämpferanordnung wird gemäß einer vorteilhaften Variante vorgeschlagen, dass die Trägeranordnung wenigstens einen Teil der Primärseite oder der Sekundärseite bildet.

Durch die Funktionsintegration bzw. die strukturelle Integration, d. h. durch die Eingliederung der Trägeranordnung bzw. eines Abschnitts derselben in die Torsionsschwingungsdämpferanordnung, können Bauteile eingebaut werden und es können die Baugruppen Elektromaschine und Torsionsschwingungsdämpferanordnung näher aneinander heranrücken, mit dem Vorteil, dass die gesamte Baugröße bzw. Baulänge eines derartigen Teilsystems gegenüber aus dem Stand der Technik bekannten Systemen verringert werden kann.

Es kann beispielsweise vorgesehen sein, dass die Trägeranordnung einen der Kraftabstützung der Dämpferelementenanordnung dienenden Teil der Primärseite oder der Sekundärseite bildet. Um eine symmetrische Kraftübertragung ohne die Gefahr eines gegenseitigen Verkantens von Primärseite und Sekundärseite zu erhalten, wird weiterbildend vorgeschlagen, dass von der Primärseite und der Sekundärseite eine Seite, vorzugsweise die Primärseite, zwei wenigstens bereichsweise in axialem Abstand zueinander liegende, gewünschtenfalls als Deckscheibenbereiche ausgeführte Kraftabstützbereiche aufweist, und dass die Trägeranordnung wenigstens einen der Kraftabstützbereiche bildet. Die andere Seite von der Primärseite und der Sekundärseite kann ein axial zwischen die beiden Kraftabstützbereiche der einen Seite eingreifendes Zentralscheibenelement aufweisen.

Zur weiteren Minimierung des zur Verfügung zu stellenden Bauraums wird weiterbildend vorgeschlagen, dass die Trägeranordnung mit ihrem wenigstens einen Teil der Primärseite bzw. Sekundärseite bildenden Bereich im Wesentlichen radial innerhalb der Statoranordnung oder/und der Rotoranordnung liegt und sich vorzugsweise wenigstens bereichsweise axial mit dieser überlappt.

Weitere Ausführungsmöglichkeiten bzw. Weiterbildungsmöglichkeiten für das Antriebssystem betreffend die Elektromaschine und die Torsionsschwingungsdämpferanordnung kann auf die deutschen Patentanmeldungen Az. 100 06 646.1 und 100 23 113.6 verwiesen werden, die am 15.02.2000 und 11.05.2000 beim Deutschen Patent- und Markenamt eingereicht wurden.

Zur optimalen Ausnutzung des zur Verfügung stehenden Bauraums wird ferner vorgeschlagen, dass die Mehrfach-Kupplungseinrichtung axial benachbart zu einem die Elektromaschine und die Torsionsschwingungsdämpferanordnung aufweisenden Subsystem des Antriebssystems angeordnet ist und sich vorzugsweise über etwa den gleichen oder einen kleineren Radialbereich wie dieses Subsystem erstreckt.

Die vorstehend angesprochene relative Anordnung der Torsionsschwingungsdämpferanordnung, der Elektromaschine und der Mehrfach-Kupplungseinrichtung ermöglicht beispielsweise eine optimale Bauraumausnutzung in dem Fall, dass eine das Antriebssystem bzw. einen Teil des Antriebssystems aufnehmende Getriebeglocke kegelförmig ausgebildet ist.

Nach einer anderen Ausführungsvariante wird vorgeschlagen, dass die Mehrfach-Kupplungseinrichtung radial innerhalb der Statoranordnung oder/und der Rotoranordnung liegt und sich vorzugsweise wenigstens bereichsweise axial mit dieser überlappt. Dabei kann die Torsionsschwingungsdämpferanordnung axial benachbart zu einem die Mehrfach-Kupplungseinrichtung sowie die Statoranordnung und ggf. die Rotoranordnung aufweisenden Subsystem des Antriebssystems angeordnet sein und sich vorzugsweise über etwa den gleichen oder einen kleineren Radialbereich wie dieses Subsystem erstrecken.

Wenn vorstehend von einem "Subsystem" gesprochen wird, soll hierdurch ein Teilsystem des erfindungsgemäßen Antriebssystems angesprochen werden, wobei aber nicht zwingend ein "Teilsystem" im Sinne der oben angesprochenen Montageaspekte gemeint ist.

Eine Funktionsintegration kann auch im Zusammenhang mit einer der Statoranordnung zugeordneten Statorträgeranordnung im Hinblick auf die Reduzierung der Bauteilzahl und Einsparung von Bauraum vorteilhaft sein. Hierzu wird vorgeschlagen, dass eine die Statoranordnung haltende Statorträgeranordnung eine Wandung oder einen Wandungsabschnitt eines die Mehrfach-Kupplungseinrichtung aufnehmenden Aufnahmeraums bildet, der im Falle einer nasslaufenden Mehrfach-Kupplungseinrichtung vorzugsweise abgedichtet ausgeführt ist. Die Rotoranordnung kann an wenigstens einem Tragelement gehalten sein, das sich von einem radial außerhalb der Dämpferelementenanordnung liegenden Bereich des der Kraftabstützung liegenden Teil der Primärseite bzw. Sekundärseite im Wesentlichen in axialen Richtung erstreckt. Letztere Ausbildung ist insbesondere zweckmäßig in Verbindung mit der Ausgestaltung, dass die Mehrfach-Kupplungseinrichtung radial innerhalb der Statoranordnung bzw. Rotoranordnung liegt und sich wenigstens bereichsweise axial mit dieser überlappt.

Es wurde schon angesprochen, dass die Mehrfach-Kupplungseinrichtung eine nasslaufende Kupplungseinrichtung sein kann. Die Erfindung wird im Folgenden anhand von in den Figuren gezeigten Ausführungsbeispielen näher erläutert.
- Fig. 1: zeigt in einer teilgeschnittenen Darstellung eine in einem Antriebsstrang eines Kraftfahrzeugs zwischen einem Getriebe und einer Antriebseinheit angeordnete Doppelkupplung mit zwei Lamellen-Kupplungsanordnungen.
- Fig. 2: zeigt in einer der Fig. 1 entsprechenden Darstellungen eine Doppelkupplung mit zugeordnetem Torsionsschwingungsdämpfer.
- Fig. 3-7: zeigen Ausführungsformen nicht erfindungsgemäßer Doppelkupplungen, die jeweils einen in die Kupplung integrierten Torsionsschwingungsdämpfer aufweisen und teilweise (Ausführungsbeispiele der Fig. 4 bis 7) mit einem geschlossenen Nassraum ausgeführt sind, der von einer sich mitdrehenden Wandung begrenzt ist.
- Fig. 8: zeigt ein erfindungsgemäßes Antriebssystem umfassend eine erfindungsgemäße Doppelkupplung in Kombination mit einem Torsionsschwingungsdämpfer und einer Elektromaschine, beispielsweise ein sogenannter Kurbelwellenstartergenerator.
- Fig. 9-10: zeigen nicht erfindungsgemäße Antriebssysteme umfassend eine Doppelkupplung in Kombination mit einem Torsionsschwingungsdämpfer und einer Elektromaschine, beispielsweise ein sogenannter Kurbelwellenstartergenerator.

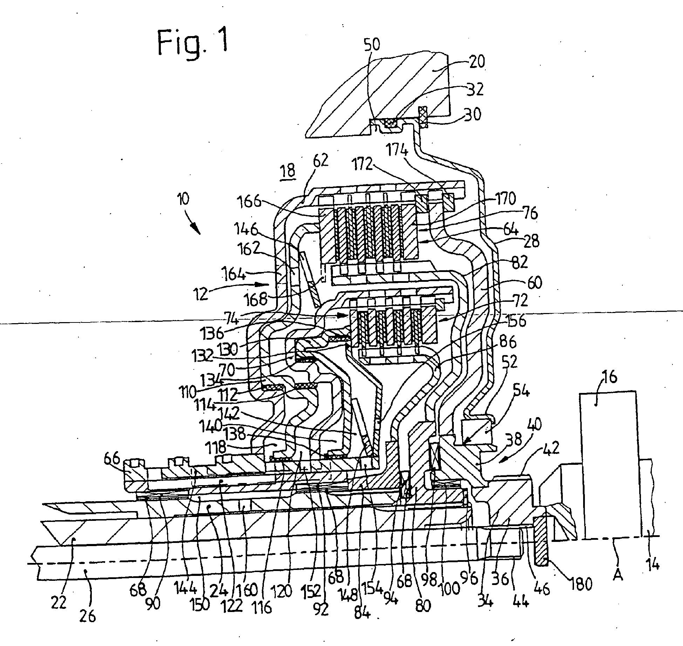

Fig. 1 zeigt eine in einem Anriebsstrang 10 zwischen einer Antriebseinheit und einem Getriebe angeordnete Doppelkupplung 12. Von der Antriebseinheit, beispielsweise eine Brennkraftmaschine, ist in Fig. 1 nur eine Abtriebswelle 14, ggf. Kurbelwelle 14, mit einem zur Ankopplung eines nicht dargestellten Torsionsschwingungsdämpfers dienenden Koppelende 16 dargestellt. Das Getriebe ist in Fig. 1 durch einen eine Getriebegehäuseglocke 18 begrenzenden Getriebegehäuseabschnitt 20 und zwei Getriebeeingangswellen 22 und 24 repräsentiert, die beide als Hohlwellen ausgebildet sind, wobei die Getriebeeingangswelle 22 sich im Wesentlichen koaxial zur Getriebeeingangswelle 24 durch diese hindurch erstreckt. Im Inneren der Getriebeeingangswelle 22 ist eine Pumpenantriebswelle angeordnet, die zum Antrieb einer getriebeseitigen, in Fig. 1 nicht dargestellten Ölpumpe dient, wie noch näher erläutert wird.

Die Doppelkupplung 12 ist in die Getriebegehäuseglocke 18 aufgenommen, wobei der Glockeninnenraum in Richtung zur Antriebseinheit durch einen Deckel 28 verschlossen ist, der in eine Glockengehäuseöffnung eingepresst ist oder/und darin durch einen Sprengring 30 gesichert ist. Weist die Doppelkupplung, wie das in Fig. 1 gezeigte Ausführungsbeispiel, nasslaufende Reibungskupplungen, beispielsweise Membrankupplungen, auf, so ist es in der Regel angebracht, für einen Dichteingriff zwischen dem Deckel 28 und dem von der Getriebegehäuseglocke 18 gebildeten Kupplungsgehäuse zu sorgen, der beispielsweise mittels eines O-Rings oder eines sonstigen Dichtrings hergestellt sein kann. In Fig. 1 ist ein Dichtring 32 mit zwei Dichtlippen gezeigt.

Als Eingangsseite der Doppelkupplung 12 dient eine Kupplungsnabe 34, die aus noch näher zu erläuternden Gründen aus zwei aneinander festgelegten Ringabschnitten 36, 38 besteht. Die Kupplungsnabe 34 erstreckt sich durch eine zentrale Öffnung des Deckels 28 in Richtung zur Antriebseinheit und ist über eine Außenverzahnung 42 mit dem nicht dargestellten Torsionsschwingungsdämpfer gekoppelt, so dass über diesen eine Momentenübertragungsverbindung zwischen dem Koppelende 16 der Kurbelwelle 14 und der Kupplungsnabe 34 besteht. Möchte man auf einen Torsionsschwingungsdämpfer generell oder an dieser Stelle im Antriebsstrang verzichten, so kann die Kopplungsnabe 34 auch unmittelbar mit dem Koppelende 16 gekoppelt werden. Die Pumpenantriebswelle 26 weist an ihrem vom Getriebe fernen Ende eine Außenverzahnung 44 auf, die in eine Innenverzahnung 46 des Ringabschnitts 36 der Kupplungsnabe 34 eingreift, so dass sich die Pumpenantriebswelle 26 mit der Kupplungsnabe 34 mitdreht und dementsprechend die Ölpumpe antreibt, wenn der Kupplungsnabe 34 eine Drehbewegung erteilt wird, im Regelfall von der Antriebseinheit und in manchen Betriebssituationen eventuell auch vom Getriebe her über die Doppelkupplung (beispielsweise in einer durch das Stichwort "Motorbremse" charakterisierten Betriebssituation).

Der Deckel 28 erstreckt sich radial zwischen einem eine Radialausnehmung 50 der Gehäuseglocke 18 begrenzenden ringförmigen Umfangswandabschnitt der Gehäuseglocke 18 und dem Ringabschnitt 38 der Nabe 34, wobei es vorteilhaft ist, wenn zwischen einem radial inneren Wandbereich 52 des Deckels 28 und der Nabe 34, speziell dem Ringabschnitt 38, eine Dichtungs- oder/und Drehlageranordnung 54 vorgesehen ist, speziell dann, wenn - wie beim gezeigten Ausführungsbeispiel - der Deckel 28 an der Gehäuseglocke 18 festgelegt ist und sich dementsprechend mit der Doppelkupplung 12 nicht mitdreht. Eine Abdichtung zwischen dem Deckel und der Nabe wird insbesondere dann erforderlich sein, wenn es sich, wie beim Ausführungsbeispiel, bei den Kupplungsanordnungen der Doppelkupplung um nasslaufende Kupplungen handelt. Eine hohe Betriebssicherheit auch im Falle von auftretenden Schwingungen und Vibrationen wird erreicht, wenn die Dichtungs- oder/und Drehlageranordnung 54 axial am Deckel 28 oder/und an der Kupplungsnabe 34 gesichert ist, etwa durch einen nach radial innen umgebogenen Endabschnitt des Deckelrands 52, wie in Fig. 1 zu erkennen ist.

An dem Ringabschnitt 38 der Nabe 34 ist ein Trägerblech 60 drehfest angebracht, das zur Drehmomentübertragung zwischen der Nabe 34 und einem Außenlamellenträger 62 einer ersten Lamellen-Kupplungsanordnung 64 dient. Der Außenlamellenträger 62 erstreckt sich in Richtung zum Getriebe und nach radial innen zu einem Ringteil 66, an dem der Außenlamellenträger drehfest angebracht ist und das mittels einer Axial- und Radial-Lageranordnung 68 an den beiden Getriebeeingangswellen 22 und 24 derart gelagert ist, dass sowohl radiale als auch axiale Kräfte an den Getriebeeingangswellen abgestützt werden. Die Axial- und Radial-Lageranordnung 68 ermöglicht eine Relativverdrehung zwischen dem Ringteil 66 einerseits und sowohl der Getriebeeingangswelle 22 als auch der Getriebeeingangswelle 24 andererseits. Auf den Aufbau und die Funktionsweise der Axial- und Radial-Lageranordnung wird später noch näher eingegangen.

Am Ringteil 66 ist axial weiter in Richtung zur Antriebseinheit ein Außenlamellenträger 70 einer zweiten Lamellen-Kupplungsanordnung 72 drehfest angebracht, deren Lamellenpaket 74 vom Lamellenpaket 76 der ersten Lamellen-Kupplungsanorndung ringartig umgeben wird. Die beiden Außenlamellenträger 62 und 70 sind, wie schon angedeutet, durch das Ringteil 66 drehfest miteinander verbunden und stehen gemeinsam über das mittels einer Außenverzahnung mit dem Außenlamellenträger 62 in formschlüssigem Drehmomentübertragungseingriff stehende Trägerblech 60 mit der Kupplungsnabe 34 und damit - über den nicht dargestellten Torsionsschwingungsdämpfer - mit der Kurbelwelle 14 der Antriebseinheit in Momentenübertragungsverbindung. Bezogen auf den normalen Momentenfluss von der Antriebseinheit zum Getriebe dienen die Außenlamellenträger 62 und 70 jeweils als Eingangsseite der Lamellen-Kupplungsanordnung 64 bzw. 72.

Auf der Getriebeeingangswelle 22 ist mittels einer Keilnutenverzahnung o. dgl. ein Nabenteil 80 eines Innenlamellenträgers 82 der ersten Lamellen-Kupplungsanordnung 64 drehfest angeordnet. In entsprechender Weise ist auf der radial äußeren Getriebeeingangswelle 24 mittels einer Keilnutenverzahnung o. dgl. ein Nabenteil 84 eines Innenlamellenträger 86 der zweiten Lamellen-Kupplungsanordnung 72 drehfest angeordnet. Bezogen auf den Regel-Momentenfluss von der Antriebseinheit in Richtung zum Getriebe dienen die Innenlamellenträger 82 und 86 als Ausgangsseite der ersten bzw. zweiten Lamellen-Kupplungsanordnung 64 bzw. 72.

Es wird noch einmal auf die radiale und axiale Lagerung des Ringteils 66 an den Getriebeeingangswellen 22 und 24 Bezug genommen. Zur radialen Lagerung des Ringteils 66 dienen zwei Radial-Lagerbaugruppen 90 und 92, die zwischen der radial äußeren Getriebeeingangswelle 24 und dem Ringteil 66 wirksam sind. Die axiale Lagerung des Ringsteils 66 erfolgt betreffend einer Abstützung in Richtung zur Antriebseinheit über das Nabenteil 84, ein Axiallager 94, das Nabenteil 80 und einen das Nabenteil 80 an der radial inneren Getriebeeingangswelle 22 axial sichernden Sprengring 96. Das Ringteil 38 der Kupplungsnabe 34 ist wiederum über ein Axiallager 68 und ein Radiallager 100 an dem Nabenteil 80 gelagert. In Richtung zum Getriebe ist das Nabenteil 80 über das Axiallager 94 an einem Endabschnitt der radial äußeren Getriebeeingangswelle 24 axial abgestützt. Das Nabenteil 84 kann unmittelbar an einem Ringanschlag o. dgl. oder einem gesonderten Sprengring o. dgl. in Richtung zum Getriebe an der Getriebeeingangswelle 24 abgestützt sein. Da das Nabenteil 84 und das Ringteil 66 gegeneinander relativ-verdrehbar sind, kann zwischen diesen Komponenten ein Axiallager vorgesehen sein, sofern nicht das Lager 92 sowohl Axiallager- als auch Radiallagerfunktion hat. Vom Letzteren wird in Bezug auf das Ausführungsbeispiel in Fig. 1 ausgegangen.

Große Vorteile ergeben sich daraus, wenn, wie beim gezeigten Ausführungsbeispiel, die sich in radialer Richtung erstreckenden Abschnitte der Außenlamellenträger 62 und 70 auf einer axialen Seite einer zu einer Achse A der Doppelkupplung 12 erstreckenden Radialebene angeordnet sind und die sich in radialer Richtung erstreckenden Abschnitte der Innenlamellenträger 82 und 86 der beiden Lamellen-Kupplüngsanordnungen auf der anderen axialen Seite dieser Radialebene angeordnet sind. Hierdurch wird ein besonders kompakter Aufbau möglich, insbesondere dann, wenn - wie beim gezeigten Ausführungsbeispiel - Lamellenträger einer Sorte (Außenlamellenträger oder Innenlamellenträger, beim Ausführungsbeispiel die Außenlamellenträger) drehfest miteinander verbunden sind und jeweils als Eingangsseite der betreffenden Lamellen-Kupplungsanordnung in Bezug auf den Kraftfluss von der Antriebseinheit zum Getriebe dienen.

In die Doppelkupplung 12 sind Betätigungskolben zur Betätigung der Lamellen-Kupplungsanordnungen integriert, im Falle des gezeigten Ausführungsbeispiels zur Betätigung der Lamellen-Kupplungsanordnungen im Sinne eines Einrückens. Ein der ersten Lamellen-Kupplungsanordnung 64 zugeordneter Betätigungskolben 110 ist axial zwischen dem sich radial erstreckenden Abschnitt des Außenlamellenträgers 62 der ersten Lamellen-Kupplungsanordnung 64 und dem sich radial erstreckenden Abschnitt des Außenlamellenträgers 70 der zweiten Lamellen-Kupplungsanordnung 72 angeordnet und an beiden Außenlamellenträgern sowie am Ringteil 66 mittels Dichtungen 112, 114, 116 axial verschiebbar und eine zwischen dem Außenlamellenträger 62 und dem Betätigungskolben 110 ausgebildete Druckkammer 118 sowie eine zwischen dem Betätigungskolben 110 und dem Außenlamellenträger 70 ausgebildete Fliehkraft-Druckausgleichskammer 120 abdichtend geführt. Die Druckkammer 118 steht über einen in dem Ringteil 66 ausgebildeten Druckmediumkanal 122 mit einer an einer Druckmediumsversorgung, hier die bereits erwähnte Ölpumpe, angeschlossenen Drucksteuereinrichtung, ggf. ein Steuerventil, in Verbindung, wobei der Druckmediumskanal 122 über eine das Ringteil 66 aufnehmende, ggf. getriebefeste Anschlusshülse an der Drucksteuereinrichtung angeschlossen ist. Zum Ringteil 66 ist in diesem Zusammenhang zu erwähnen, dass dieses für eine einfachere Herstellbarkeit insbesondere hinsichtlich des Druckmediumkanals 122 sowie eines weiteren Druckmediumkanals zweiteilig hergestellt ist mit zwei ineinander gesteckten hülsenartigen Ringteilabschnitten, wie in Fig. 1 angedeutet ist.

Ein der zweiten Lamellen-Kupplungsanordnung 72 zugeordneter Betätigungskolben 130 ist axial zwischen dem Außenlamellenträger 70 der zweiten Lamellen-Kupplungsanordnung 72 und einem sich im Wesentlichen radial erstreckenden und an einem vom Getriebe fernen axialen Endbereich des Ringteils 66 drehfest und fluiddicht angebrachten Wandungsteil 132 angeordnet und mittels Dichtungen 134, 136 und 138 am Außenlamellenträger 70, dem Wandungsteil 132 und dem Ringteil 66 axial verschiebbar und eine zwischen dem Außenlamellenträger 70 und dem Betätigungskolben 130 ausgebildete Druckkammer 140 sowie eine zwischen dem Betätigungskolben 130 und dem Wandungsteil 132 ausgebildete Fliehkraft-Druckausgleichskammer 142 abdichtend geführt. Die Druckkammer 140 ist über einen weiteren (schon erwähnten) Druckmediumskanal 144 in entsprechender Weise wie die Druckkammer 118 an einer/der Drucksteuereinrichtung angeschlossen. Mittels der Drucksteuereinrichtung(en) kann an den beiden Druckkammern 118 und 140 wahlweise (ggf. auch gleichzeitig) von der Druckmediumsquelle (hier Ölpumpe) aufgebrachter Druck angelegt werden, um die erste Lamellen-Kupplungsanordnung 64 oder/und die zweite Lamellen-Kupplungsanordnung 72 im Sinne eines Einrückens zu betätigen. Zum Rückstellen, also zum Ausrücken der Kupplungen dienen Membranfedern 146, 148, von denen die dem Betätigungskolben 130 zugeordnete Membranfeder 148 in der Fliehkraft-Druckausgleichskammer 142 aufgenommen ist.

Die Druckkammern 118 und 140 sind, jedenfalls während normalen Betriebszuständen der Doppelkupplung 112, vollständig mit Druckmedium (hier Hydrauliköl) gefüllt, und der Betätigungszustand der Lamellen-Kupplungsanordnungen hängt an sich vom an den Druckkammern angelegten Druckmediumsdruck ab. Da sich aber die Außenlamellenträger 62 und 70 samt dem Ringteil 66 und dem Betätigungskolben 110 und 130 sowie dem Wandungsteil 133 im Fahrbetrieb mit der Kupplungswelle 14 mitdrehen, kommt es auch ohne Druckanlegung an den Druckkammern 118 und 140 von seiten der Drucksteuereinrichtung zu fliehkraftbedingten Druckerhöhungen in den Druckkammern, die zumindest bei größeren Drehzahlen zu einem ungewollten Einrücken oder zumindest Schleifen der Lamellen-Kupplungsanordnungen führen könnten. Aus diesem Grunde sind die schon erwähnten Fliehkraft-Druckausgleichskammern 120, 142 vorgesehen, die ein Druckausgleichsmedium aufnehmen und in denen es in entsprechender Weise zu fliehkraftbedingten Druckerhöhungen kommt, die die in den Druckkammern auftretenden fliehkraftbedingten Druckerhöhungen kompensieren.

Man könnte daran denken, die Fliehkraft-Druckausgleichskammern 120 und 142 permanent mit Druckausgleichsmedium, beispielsweise Öl, zu füllen, wobei man ggf. einen Volumenausgleich zur Aufnahme von im Zuge einer Betätigung der Betätigungskolben verdrängtem Druckausgleichsmedium vorsehen könnte. Bei der in Fig. 1 gezeigten Ausführungsform werden die Fliehkraft-Druckausgleichskammern 120, 142 jeweils erst im Betrieb des Antriebsstrangs mit Druckausgleichsmedium gefüllt, und zwar in Verbindung mit der Zufuhr von Kühlfluid, beim gezeigten Ausführungsbeispiel speziell Kühlöl, zu den Lamellen-Kupplungsanordnungen 64 und 72 über einen zwischen dem Ringteil 66 und der äußeren Getriebeeingangswelle 24 ausgebildeten Ringkanal 150, dem die für das Kühlöl durchlässigen Lager 90, 92 zuzurechnen sind. Das Kühlöl fließt von einem getriebeseitigen Anschluss zwischen dem Ringteil und der Getriebeeingangswelle 24 in Richtung zur Antriebseinheit durch das Lager 90 und das Lager 92 hindurch und strömt dann in einem Teilstrom zwischen dem vom Getriebe fernen Endabschnitt des Ringteils 66 und dem Nabenteil 84 nach radial außen in Richtung zum Lamellenpaket 74 der zweiten Lamellen-Kupplungsanordnung 72, tritt aufgrund von Durchlassöffnungen im Innenlamellenträger 86 in den Bereich der Lamellen ein, strömt zwischen den Lamellen des Lamellenpakets 74 bzw. durch Reibbelagnuten o. dgl. dieser Lamellen nach radial außen, tritt durch Durchlassöffnungen im Außenlamellenträger 70 und Durchlassöffnungen im Innenlamellenträger 82 in den Bereich des Lamellenpakets 76 der ersten Lamellen-Kupplungsanordnung 64 ein, strömt zwischen den Lamellen dieses Lamellenpakets bzw. durch Belagnuten o. dgl. dieser Lamellen nach radial außen und fließt dann schließlich durch Durchlassöffnungen im Außenlamellenträger 62 nach radial außen ab. An der Kühlölzufuhrströmung zwischen dem Ringteil 66 und der Getriebeeingangswelle 24 sind auch die Fliehkraft-Druckausgleichskammern 120, 142 angeschlossen, und zwar mittels Radialbohrungen 152, 154 im Ringteil 66. Da bei stehender Antriebseinheit das als Druckausgleichsmedium dienende Kühlöl in den Druckausgleichskammern 120, 142 mangels Fliehkräften aus den Druckausgleichskammern abläuft, werden die Druckausgleichskammern jeweils wieder neu während des Betriebs des Antriebsstrangs (des Kraftfahrzeugs) gefüllt.

Da eine der Druckkammer 140 zugeordnete Druckbeaufschlagungsfläche des Betätigungskolbens 130 kleiner ist und sich überdies weniger weit nach radial außen erstreckt als eine der Druckausgleichskammer 142 zugeordnete Druckbeaufschlagungsfläche des Kolbens 130, ist in dem Wandungsteil 132 wenigstens eine Füllstandsbegrenzungsöffnung 156 ausgebildet, die einen maximalen, die erforderliche Fliehkraftkompensation ergebenden Radialfüllstand der Druckausgleichskammer 142 einstellt. Ist der maximale Füllstand erreicht, so fließt das über die Bohrung 154 zugeführte Kühlöl durch die Füllstandsbegrenzungsöffnung 156 ab und vereinigt sich mit dem zwischen dem Ringteil 66 und dem Nabenteil 84 nach radial außen tretenden Kühlölstrom. Im Falle des Kolbens 110 sind die der Druckkammer 118 und die der Druckausgleichskammer 120 zugeordneten Druckbeaufschlagungsflächen des Kolbens gleich groß und erstrecken sich im gleichen Radialbereich, so dass für die Druckausgleichskammer 120 entsprechende Füllstandsbegrenzungsmittel nicht erforderlich sind.

Der Vollständigkeit halber soll noch erwähnt werden, dass im Betrieb vorzugsweise noch weitere Kühlölströmungen auftreten. So ist in der Getriebeeingangswelle 24 wenigstens eine Radialbohrung 160 vorgesehen, über die sowie über einen Ringkanal zwischen den beiden Getriebeeingangswellen ein weiterer Kühlölteilstrom fließt, der sich in zwei Teilströme aufspaltet, von denen einer zwischen den beiden Nabenteilen 80 und 84 (durch das Axiallager 94) nach radial außen fließt und der andere Teilstrom zwischen dem getriebefernen Endbereich der Getriebeeingangswelle 22 und dem Nabenteil 80 sowie zwischen diesem Nabenteil 84 und dem Ringabschnitt 38 der Kupplungsnabe 34 (durch die Lager 98 und 100) nach radial außen strömt.

Da sich das nach radial außen strömende Kühlöl benachbart einem radial äußeren Abschnitt des der ersten Lamellen-Kupplungsanordnung 64 zugeordneten Betätigungskolbens 110 ansammeln könnte und zumindest bei größeren Drehzahlen fliehkraftbedingt die Einrückbewegung dieses Kolbens behindern könnte, weist der Kolben 110 wenigstens eine Druckausgleichsöffnung 162 auf, die einen Kühlölfluss von einer Seite des Kolbens zur anderen ermöglicht. Es wird dementsprechend zu einer Ansammlung von Kühlöl auf beiden Seiten des Kolbens kommen mit entsprechender Kompensation fliehkraftbedingt auf den Kolben ausgeübter Druckkräfte. Ferner wird verhindert, dass andere auf einer Wechselwirkung des Kühlöls mit dem Kolben beruhende Kräfte die erforderlichen axialen Kolbenbewegungen behindern. Es wird hier beispielsweise an hydrodynamische Kräfte o. dgl. gedacht sowie an ein "Festsaugen" des Kolbens am Außenlamellenträger 62.

Es ist auch möglich, wenigstens eine Kühlölabflussöffnung im sich radial erstreckenden, radial äußeren Bereich des Außenlamellenträgers 62 der ersten Lamellen-Kupplungsanordnung 64 vorzusehen. Eine derartige Kühlölabflussöffnung ist bei 164 gestrichelt angedeutet. Um trotzdem eine hinreichende Durchströmung des Lamellenpakets 76 der ersten Lamellen-Kupplungsanordnung 64 mit Kühlfluid (Kühlöl) zu gewährleisten, kann ein Kühlölleitelement (allgemein ein Kühlfluidleitelement) vorgesehen sein. In Fig. 1 ist gestrichelt angedeutet, dass eine benachbarte Endlamelle 166 des Lamellenpakets 76 einen Kühlölleitabschnitt 168 aufweisen könnte, so dass die Endlamelle 166 selbst als Kühlölleitelement dient.

Im Hinblick auf eine einfache Ausbildung der Drucksteuereinrichtung für die Betätigung der beiden Lamellen-Kupplungsanordnungen wurde bei dem Ausführungsbeispiel der Fig. 1 vorgesehen, dass eine für die radial innere Lamellen-Kupplungsanordnung 72 bezogen auf einen Betätigungsdruck an sich gegebene, im Vergleich zur anderen Kupplungsanordnung 64 geringere Momentenübertragungsfähigkeit (aufgrund eines geringeren effektiven Reibradius als die radial äußere Kupplungsanordnung 64) zumindest teilweise kompensiert wird. Hierzu ist die der Druckkammer 140 zugeordnete Druckbeaufschlagungsfläche des Kolbens 130 größer als die der Druckkammer 118 zugeordnete Druckbeaufschlagungsfläche des Kolbens 110, so dass bei gleichem Hydrauliköldruck in den Druckkammern auf den Kolben 130 größere axial gerichtete Kräfte als auf den Kolben 110 ausgeübt werden.

Es sollte noch erwähnt werden, dass durch eine radiale Staffelung der den Kolben zugeordneten Dichtungen, speziell auch eine axiale Überlappung von wenigstens einigen der Dichtungen, eine gute Ausnutzung des zur Verfügung stehenden Bauraums ermöglicht.

Bei den Lamellenpaketen 74, 76 können Maßnahmen zur Vermeidung der Gefahr einer Überhitzung getroffen sein zusätzlich zu der schon beschriebenen Zufuhr von Kühlöl und der Ausbildung von (in der Fig. 1 nur schematisch angedeuteten) Kühlöldurchtrittsöffnungen in den Lamellenträgern. So ist es vorteilhaft, wenigstens einige der Lamellen als "Wärmezwischenspeicher" zu nutzen, die etwa während eines Schlupfbetriebs entstehende, die Wärmeabfuhrmöglichkeiten mittels des Kühlfluids (hier Kühlöls) oder durch Wärmeleitung über die Lamellenträger momentan überfordernde Wärme zwischenspeichern, um die Wärme zu einem späteren Zeitpunkt, etwa in einem ausgekuppelten Zustand der betreffenden Lamellen-Kupplungsanordnung, abführen zu können. Hierzu sind bei der radial inneren (zweiten) Lamellen-Kupplungsanordnung reibbelaglose, also keinen Reibbelag tragende Lamellen axial dicker als Lamellentragelemente von Reibbelag-tragenden Lamellen ausgebildet, um für die reibbelaglosen Lamellen jeweils ein vergleichsweise großes Materialvolumen mit entsprechender Wärmekapazität vorzusehen. Diese Lamellen sollten aus einem Material hergestellt werden, das eine nennenswerte Wärmespeicherfähigkeit (Wärmekapazität) hat, beispielsweise aus Stahl. Die Reibbelag-tragenden Lamellen können im Falle einer Verwendung von üblichen Reibbelägen, beispielsweise aus Papier, nur wenig Wärme zwischenspeichern, da Papier eine schlechte Wärmeleitfähigkeit hat.

Die Wärmekapazität der die Reibbeläge tragenden Reibbelagtragelemente können ebenfalls als Wärmespeicher verfügbar gemacht werden, wenn man anstelle von Belagmaterialien mit geringer Leitfähigkeit Belagmaterialien mit hoher Leitfähigkeit verwendet. In Betracht kommt die Verwendung von Reibbelägen aus Sintermaterial, das eine vergleichsweise hohe Wärmeleitfähigkeit hat. Problematisch an der Verwendung von Sinterbelägen ist allerdings, dass Sinterbeläge einen degressiven Verlauf des Reibwerts ì über einer Schlupfdrehzahl (Relativdrehzahl ÄN zwischen den reibenden Oberflächen) aufweisen, also dass dì/dÄN <0 gilt. Ein degressiver Verlauf des Reibwerts ist insoweit nachteilig, als dieser eine Selbsterregung von Schwingungen im Antriebsstrang fördern kann bzw. derartige Schwingungen zumindest nicht dämpfen kann. Es ist deshalb vorteilhaft, wenn in einem Lamellenpaket sowohl Lamellen mit Reibbelägen aus Sintermaterial als auch Lamellen mit Reibbelägen aus einem anderen Material mit progressivem Reibwertverlauf über der Schlupfdrehzahl (dì/dÄN >0) vorgesehen sind, so dass sich für das Lamellenpaket insgesamt ein progressiver Reibwertverlauf über der Schlupfdrehzahl oder zumindest näherungsweise ein neutraler Reibwertverlauf über der Schlupfdrehzahl (dì/dÄN =0) ergibt und dementsprechend eine Selbsterregung von Schwingungen im Antriebsstrang zumindest nicht gefördert wird oder - vorzugsweise - Drehschwingungen im Antriebsstrang sogar (aufgrund eines nennenswert progressiven Reibwertverlaufs über der Schlupfdrehzahl) gedämpft werden.

Es wird hier davon ausgegangen, dass beim Ausführungsbeispiel der Fig. 1 das Lamellenpaket 74 der radial inneren Lamellen-Kupplungsanordnung 60 ohne Sinterbeläge ausgeführt ist, da die radial äußere Lamellen-Kupplungsanordnung 64 vorzugsweise als Anfahrkupplung mit entsprechendem Schlupfbetrieb eingesetzt wird. Letzteres, also die Verwendung der radial äußeren Lamellen-Kupplungsanordnung als Anfahrkupplung, ist insoweit vorteilhaft, als dass aufgrund des größeren effektiven Reibradius diese Lamellen-Kupplungsanordnung mit geringeren Betätigungskräften (für die gleiche Momentenübertragungsfähigkeit) betrieben werden kann, so dass die Flächenpressung gegenüber der zweiten Lamellen-Kupplungsanordnung reduziert sein kann. Hierzu trägt auch bei, wenn man die Lamellen der ersten Lamellen-Kupplungsanordnung 64 mit etwas größerer radialer Höhe als die Lamellen der zweiten Lamellen-Kupplungsanordnung 72 ausbildet. Gewünschtenfalls können aber auch für das Lamellenpaket 74 der radial inneren (zweiten) Lamellen-Kupplungsanordnung 72 Reibbeläge aus Sintermaterial verwendet werden, vorzugsweise - wie erläutert - in Kombination mit Reibbelägen aus einem anderen Material, etwa Papier.

Während bei dem Lamellenpaket 74 der radial inneren Lamellen-Kupplungsanordnung 72 alle Innenlamellen Reibbelag-tragende Lamellen und alle Außenlamellen belaglose Lamellen sind, wobei die das Lamellenpaket axial begrenzenden Endlamellen Außenlamellen und damit belaglose Lamellen sind, sind beim Lamellenpaket 76 der ersten Lamellen-Kupplungsanordnung 64 die Innenlamellen belaglose Lamellen und die Außenlamellen einschließlich der Endlamellen 166, 170 Reibbelag-tragende Lamellen. Wenigstens die Endlamellen 166 und 168 weisen nach einer bevorzugten Ausbildung axial wesentlich dickere Belagtragelemente als die Belagtragelemente der anderen Außenlamellen auf und sind mit Belägen aus Sintermaterial ausgebildet, um die ein vergleichsweise großes Volumen aufweisenden Belagtragelemente der beiden Endlamellen als Wärmezwischenspeicher nutzbar zu machen. Wie beim Lamellenpaket 74 sind die belaglosen Lamellen axial dicker als die Lamellentragelemente der Reibbelag- tragenden Lamellen (mit Ausnahme der Endlamellen), um eine vergleichsweise große Wärmekapazität zur Wärmezwischenspeicherung bereitzustellen. Die axial innen liegenden Außenlamellen sollten zumindest zum Teil Reibbeläge aus einem anderen, einen progressiven Reibwertverlauf zeigenden Material, aufweisen, um für das Lamellenpaket insgesamt zumindest eine näherungsweise neutralen Reibwertverlauf über der Schlupfdrehzahl zu erreichen.

Weitere Einzelheiten der Doppelkupplung 12 gemäß dem beschriebenen Ausführungsbeispiel sind für den Fachmann ohne weiteres aus Fig. 1 entnehmbar. So ist die Axialbohrung im Ringabschnitt 36 der Kupplungsnabe 34, in der die Innenverzahnung 46 für die Pumpenantriebswelle ausgebildet ist, durch einen darin festgelegten Stopfen 180 öldicht verschlossen. Das Trägerblech 60 ist am Außenlamellenträger 62 durch zwei Halteringe 172, 174 axial fixiert, von denen der Haltering 172 auch die Endlamelle 170 axial abstützt. Ein entsprechender Haltering ist auch für die Abstützung des Lamellenpakets 74 am Außenlamellenträger 70 vorgesehen.

Es sollte noch betreffend die Ausbildung der Außenlamellen der ersten Lamellen-Kupplungsanordnung 64 als Belag-tragende Lamellen erwähnt werden, dass in Verbindung mit der Zuordnung der Außenlamellen zur Eingangsseite der Kupplungseinrichtung eine bessere Durchflutung des Lamellenpakets 76 erreicht wird, wenn die Reibbeläge - wie herkömmlich regelmäßig üblich - mit Reibbelagnuten oder anderen Fluiddurchgängen ausgebildet sind, die eine Durchströmung des Lamellenpakets auch im Zustand des Reibeingriffs ermöglichen. Da die Eingangsseite sich auch bei ausgekuppelter Kupplungsanordnung mit der Antriebseinheit bzw. dem Koppelende 16 bei laufender Antriebseinheit mitdreht, kommt es aufgrund der umlaufenden Reibbelagnuten bzw. der umlaufenden Fluiddurchgänge zu einer Art Förderwirkung mit entsprechender besserer Durchflutung des Lamellenpakets. In Abweichung von der Darstellung in Fig. 1 könnte man auch die zweite Lamellen-Kupplungsanordnung dementsprechend ausbilden, also die Außenlamellen als Reibbelag-tragende Lamellen ausbilden.

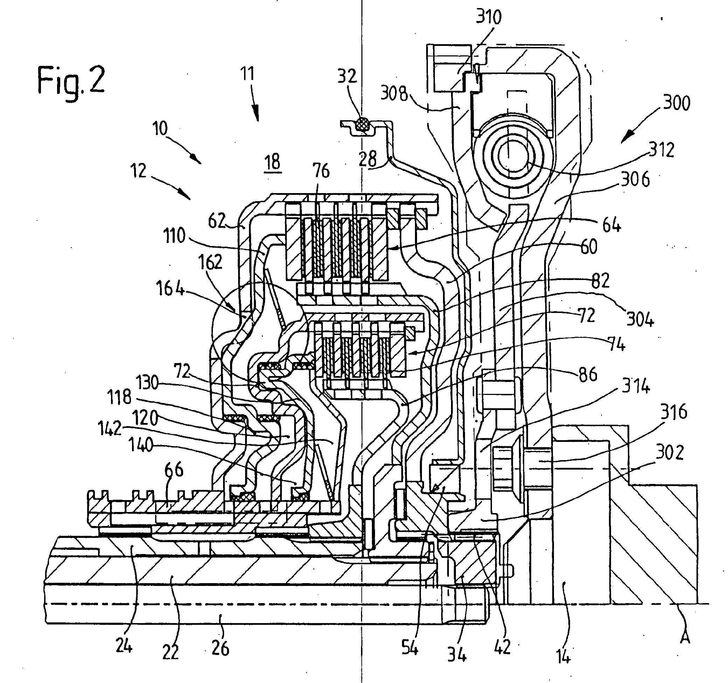

Im Folgenden werden weitere Ausführungsbeispiele von Mehrfach-Kupplungseinrichtungen, speziell Doppel-Kupplungseinrichtungen, hinsichtlich verschiedener Aspekte erläutert. Da die Ausführungsbeispiele der Fig. 2 bis 14 im grundlegenden Aufbau der Doppelkupplung selbst dem Ausführungsbeispiel der Fig. 1 entsprechen und die Darstellungen der Figuren dem Fachmann auf Grundlage der vorangehenden detaillierten Erläuterung des Ausführungsbeispiels der Fig. 1 unmittelbar verständlich sind, kann darauf verzichtet werden, die folgenden Ausführungsbeispiele in allen Einzelheiten zu erläutern. Es wird insoweit auf die vorangehende Erläuterung des Ausführungsbeispiels der Fig. 1 verwiesen.

Beim Ausführungsbeispiel der Fig. 2 sind der erste Außenlamellenträger 62 und der erste Betätigungskolben 110 im Hinblick auf die Kühlölabflussöffnungen 162 und 164 auf spezielle Weise ausgebildet, um einerseits im Bereich des Außenlamellenträgers 72 der zweiten (inneren) Lamellen-Kupplungsanordnung axialen Platz zu sparen und andererseits, wenn gewünscht, eine Verdrehsicherung gegen eine Verdrehung des ersten Betätigungskolbens 110 gegenüber dem Außenlamellenträger 62 vorzusehen. Hierzu sind der erste Außenlamellenträger 62 und der erste Betätigungskolben 110 in Umfangsrichtung abwechselnd partiell ausgenommen, so dass nicht ausgenommene Stellen des Betätigungskolbens 110 in ausgenommene Stellen des Außenlamellenträgers 62 und nicht ausgenommene Stellen des Außenlamellenträgers 62 in ausgenommene Stellen des Betätigungskolbens 110 eingreifen. Das Vorsehen der genannten Verdrehsicherung ist insoweit sinnvoll, als dass eine zusätzliche Belastung der zwischen dem Außenlamellenträger 62 und dem Betätigungskolben 110 wirkenden Dichtungen durch Mikrorotationen in Folge von Motorungleichförmigkeiten verhindert werden können. Für diese Verdrehsicherung müssen der Betätigungskolben 110 und der Außenlamellenträger 62 auch im eingerückten Zustand der ersten Lamellen-Kupplungsanordnung 64 ineinander greifen, was sonst nicht erforderlich wäre.

Bei den Ausführungsbeispielen der Fig. 1 und 2 ist die Kupplungseinrichtung über die Kupplungsnabe 34 an der Antriebseinheit des Antriebsstrangs angekoppelt, und zwar vorzugsweise über einen Torsionsschwingungsdämpfer, wie in Fig. 2 als Beispiel gezeigt ist.

Die in Fig. 2 gezeigte Kombination aus einer Doppelkupplung 12 und einem Torsionsschwingungsdämpfer 300 zeichnet sich durch eine einfache Montage in einem Antriebsstrang aus. Das von der Doppelkupplung und dem Torsionsschwingungsdämpfer gebildete Antriebssystem 11 lässt sich also einfach in einen Antriebsstrang zwischen der jeweiligen Antriebseinheit (Motor) und dem Getriebe eingliedern. Hierzu trägt insbesondere bei, dass die Doppelkupplung 12 und der Torsionsschwingungsdämpfer 300 unabhängig voneinander am Getriebe (die Doppelkupplung) und an der Antriebseinheit (der Torsionsschwingungsdämpfer) montiert werden können, und dann das Getriebe und die Antriebseinheit samt der daran angebrachten Teilsysteme (Doppelkupplung bzw. Torsionsschwingungsdämpfer) auf einfache Weise zusammengefügt werden können unter Verkoppelung des Torsionsschwingungsdämpfers mit der Eingangsseite (hier der Kupplungsnabe 34), und zwar vermittels der Außenverzahnung 42 der Kupplungsnabe und einer zugeordneten Innenverzahnung eines Nabenteils 302 der von einem Scheibenteil 304 gebildeten Sekundärseite des Torsionsschwingungsdämpfers 300.

Um die Montage des Torsionsschwingungsdämpfers 300 an der Kurbelwelle zu erleichtern, weist das Scheibenteil 304 Werkzeug-Durchtrittsöffnungen 314 auf, durch die mittels eines entsprechenden Werkzeugs Schraubbolzen 316 festgezogen werden können, die das erste Deckblech 306 an der Kurbelwelle bzw. dem Koppelende der Kurbelwelle befestigen.

Die Primärseite des Torsionsschwingungsdämpfers 300 ist von einem an der Kurbelwelle angebrachten ersten Deckblech 306 und einem daran angebrachten zweiten Deckblech 308 gebildet, das einen Anlasserzahnkranz 310 aufweist, über den mittels eines nicht dargestellten Anlassers im Falle einer als Brennkraftmaschine ausgebildeten Antriebseinheit diese gestartet werden kann. Eine Dämpferelementenanordnung 312 des Torsionsschwingungsdämpfers 300 ist auf an sich bekannte Weise in Aussparungen des Scheibenteils 304 zwischen den beiden Deckblechen 306 und 308 aufgenommen, wobei die Deckbleche zwischen in Umfangsrichtung benachbarte Dämpferelemente eingreifende Einbuchtungen, Abstützteile oder dergleichen aufweisen, so dass insgesamt für eine primärseitige und sekundärseitige Abstützung der Dämpferelementenanordnung in Umfangsrichtung gesorgt ist. Die Dämpferelemente können unter Vermittlung von Federtellern, Gleitschuhen und dergleichen abgestützt und geführt sein.

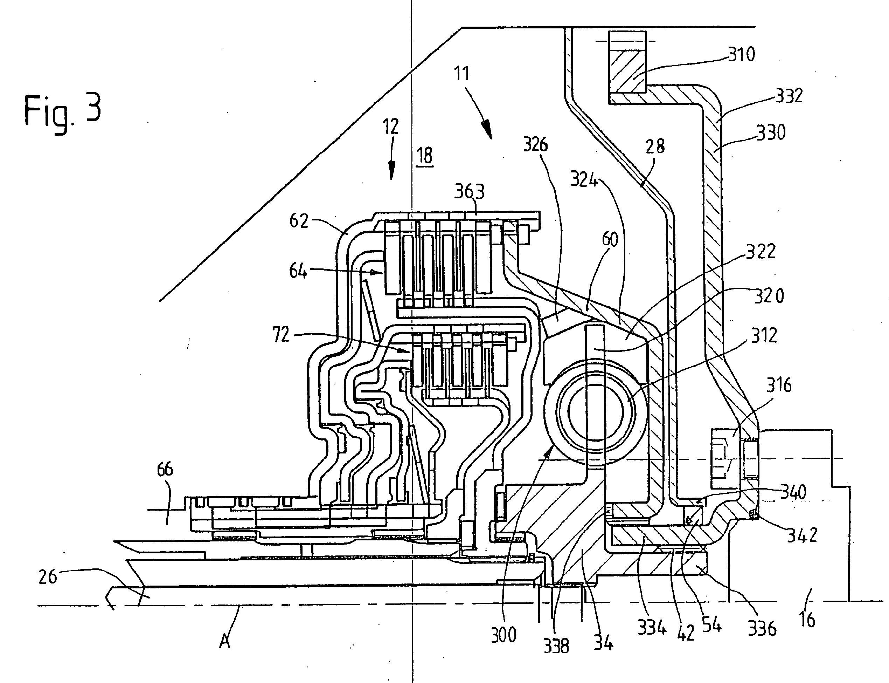

Weitere Ausführungsbeispiele von erfindungsgemäßen Antriebssystemen 11, umfassend eine Mehrfach-Kupplungseinrichtung, speziell eine Doppel-Kupplungseinrichtung und eine Torsionsschwingungsdämpferanordnung sowie ggf. eine beispielsweise von einem Kurbelwellenstartergenerator gebildete Elektromaschine werden anhand der Fig. 3 bis 10 erläutert.

Bei der Beschreibung der Ausführungsbeispiele der Fig. 3 bis 10 werden Ausführungen zu der jeweiligen Doppelkupplung 12 nur noch insoweit gemacht, als Änderungen gegenüber den vorangehend beschriebenen Ausführungsbeispielen zu erläutern sind. Die Doppelkupplungen 12 entsprechen hinsichtlich ihres inneren Aufbaus und ihrer Funktionsweise im Wesentlichen dem Ausführungsbeispiel der Fig. 1, so dass auf eine Eintragung von Bezugszeichen für die verschiedenen Komponenten verzichtet werden kann. Der Einfachheit halber wird auch darauf verzichtet, alle an sich in einer Schnittdarstellung gezeigten Bauteile in den Figuren schraffiert darzustellen. Der Fachmann wird aus einem einfachen Vergleich der betreffenden Figur mit der Fig. 1 sofort erkennen, welche Bauteile in einer Schnittansicht dargestellt sind. Der Fachmann wird auch kleinere Unterschiede in der Detailausführung der Doppelkupplungen aus den Figuren erkennen.

Beim Antriebssystem 11 der Fig. 3 ist der Torsionsschwingungsdämpfer 300 in die Doppelkupplung integriert. Hierzu weist die Kupplungsnabe 34 Radialstege 320 auf, zwischen die die ineinander geschachtelten Dämpferelemente (Dämpferfedern) der Dämpferelementenanordnung 312 aufgenommen sind. Die Kupplungsnabe 34 dient als Primärseite des Torsionsschwingungsdämpfers 300.

Als Sekundärseite des Torsionsschwingungsdämpfers 300 dient beim Antriebssystem 11 der Fig. 3 das bei den vorstehenden Ausführungsbeispielen als "Trägerblech" bezeichnete Momentenübertragungsglied 60, das Einbuchtungen oder herausgedrückte Zungen oder sonstige Abstützelemente aufweist, an denen die Dämpferelementenanordnung 312 sekundärseitig in Umfangsrichtung abgestützt ist. Die Dämpferelemente der Dämpferelementenanordnung 312 sind unter Vermittlung einer Gleitelementanordnung 322 (beispielsweise umfassend an sich bekannte Gleitschuhe, Federteller oder sonstige Gleit- und Führungselemente) an schräg in radialer und axialer Richtung verlaufenden Abschnitten 324 des Momentenübertragungsblechs 60 geführt, zwischen denen im Blech 60 definierte Führungszungen 326 derart aus dem Blech herausgedrückt sind, dass eine in einer Querschnittsansicht gemäß der Figur dachförmige Führungsanordnung geschaffen ist, die nicht nur in Umfangsrichtung, sondern auch in axialer Richtung für Führung und Haltung sorgt.

Das Antriebssystem 11 weist eine Koppelanordnung auf, die zur Ankopplung der Doppelkupplung 12 an der Antriebseinheit, speziell am Koppelende 16 der Kurbelwelle dient. Die Koppelanordnung 320 ist von einer sogenannten Flexplatte (flexplate) 332 gebildet, die radial außen einen Anlasserzahnkranz 310 trägt, der als primärseitige Zusatzmasse in Bezug auf den Torsionsschwingungsdämpfer 300 wirkt. Die Flexplatte 332 ist radial innen mit einem sich in axialer Richtung erstreckenden Koppelflansch 334 ausgeführt, der eine Innenverzahnung zur Kopplung mit der Außenverzahnung 42 der Kupplungsnabe 34 aufweist. Die Außenverzahnung 42 ist beim gezeigten Ausführungsbeispiel an einem axialen Koppelflansch 336 der Kupplungsnabe 34 vorgesehen. Der stationäre Deckel 28 ist mittels einer Drehlageranordnung 54, die vorzugsweise auch Dichtungsfunktion erfüllt, am Koppelflansch 334 der Koppelanordnung 330 gelagert.

Da das Momentenübertragungsblech 60 der Sekundärseite und die Kupplungsnabe 34 der Primärseite des Torsionsschwingungsdämpfers 300 zugeordnet sind, kommt es zu Relativverdrehungen innerhalb eines vom Torsionsschwingungsdämpfer zugelassenen Drehwinkels zwischen der Kupplungsnabe 34 einerseits und dem Momentenübertragungsblech 60 andererseits. Das an dem ersten Außenlamellenträger 62 drehfest und in beide axiale Richtungen abgestützt angebrachte Momentenübertragungsblech 60 ist radial innen am Koppelflansch 334 der Koppelanordnung 330 gelagert, und zwar unter Vermittlung eines vorzugsweise auch Dichtungsfunktionen erfüllenden Gleitrings 338, der einen axialen Schenkelabschnitt zwischen einem axialen Randflansch 340 des Momentenübertragungsblechs 60 und dem Koppelflansch 334 sowie einen radialen Schenkel zwischen dem Randflansch 340 und der Kupplungsnabe 34 aufweist. Unter Vermittlung des letzteren Schenkels des Gleitrings 338 ist die Kupplungsnabe 34 in axialer Richtung hin zur Antriebseinheit am Momentenübertragungsglied 60 abgestützt, und die vom Momentenübertragungsglied 60 aufgenommenen Axialkräfte werden vom Außenlamellenträger 62 aufgenommen und über das Ringteil 66 abgeleitet, so dass sich insgesamt ein geschlossener Kraftfluss ergibt und dementsprechend weder die Antriebseinheit mit ihrer Kurbelwelle noch das Getriebe mit seinen Getriebeeingangswellen Kräfte aufbringen bzw. aufnehmen muss, um die Doppelkupplung 12 als Einheit axial zusammen zu halten.

Zur Abdichtung der Kühlöl der Doppelkupplung zu führenden Bereiche in Richtung zur Antriebseinheit hin ist beim Ausführungsbeispiel der Fig. 3 ein Dichtring 342 zwischen dem Koppelende 16 der Kurbelwelle und der Flexplatte 332 vorgesehen, der zusammen mit der beispielsweise als Radialwellendichtring ausgeführten Dichtungs- und Drehlageranordnung 54 sowie ggf. aufgrund einer etwaigen Dichtungsfunktion des Gleitrings 338 den Radial- und Axialbereich radial innerhalb der Koppelflansch 334, 336 und axial zwischen der Kupplungsnabe 34 und dem Koppelende 16 nach radial außen abdichtet.

Es sollte noch erwähnt werden, dass zur Erhöhung des Massenträgheitsmoments der Kurbelwelle zusätzlich zum Zahnkranz 310 noch eine Zusatzmassenanordnung an der Flexplatte vorgesehen sein könnte.

Beim Ausführungsbeispiel der Fig. 3 ist folgendes Konzept verwirklicht. Die Flexplatte 330 trägt den Zahnkranz 310 sowie ggf. eine Zusatzmassenanordnung. Sie bildet ferner eine Lauffläche für die das Drehlager 54, ggf. den Radialwellendichtering 54 und dient zur Herstellung der Antriebsverbindung zwischen der Eingangsseite (Kupplungsnabe 34) der Doppelkupplung und der Kurbelwelle, wobei die Eingangsseite der Doppelkupplung gleichzeitig die Primärseite des Torsionsschwingungsdämpfers 300 ist. Die Kupplungsnabe 34 nimmt im Falle der Regel-Momentenflussrichtung von der Antriebseinheit zum Getriebe das Drehmoment von der Flexplatte 330 ab und bildet den Antrieb für den Torsionsschwingungsdämpfer 300 und die Pumpenwelle 26. Das der Sekundärseite des Torsionsschwingungsdämpfers zugeordnete Momentenübertragungsblech 60, das zusammen mit dem Außenlamellenträger 62 eventuell auch als Kupplungsgehäuse aufgefasst werden könnte, ist radial auf der Flexplatte gelagert und stützt die Kupplungssnabe 34 axial ab. Der Außenlamellenträger 62 ist ebenso wie die übrigen Lamellenträger mit Durchflussöffnungen für Kühlmittel (Kühlöl) ausgeführt, so dass das den Lamellen zugeführte Kühlmittel nach radial außen in den von der Getriebegehäuseglocke 18 gebildeten Aufnahmeraum abfließen kann, in den die Doppelkupplung eingebaut ist. Der etwa auf gleicher radialer Höhe wie die zweite, radial innen liegende Lamellen-Kupplungsanordnung angeordnete Torsionsschwingungsdämpfer 300 ist in das von dem Momentenübertragungsglied 60 und dem Außenlamellenträger 62 gebildete "Kupplungsgehäuse" aufgenommen, also gewissermaßen innerhalb eines "inneren Nassraums" der Doppelkupplung angeordnet, dem im Betrieb Kühlmittel (insbesondere Kühlöl) zugeführt wird, so dass dementsprechend auch der Torsionsschwingungsdämpfer 300 gut mit Kühlmittel versorgt wird, um diesen zu kühlen oder/und zu schmieren. Gemäß der hier gewählten Nomenklatur könnte der radial außerhalb des Außenlamellenträgers 62 und des Momentenübertragungsglieds 60 liegende Teil des von der Glocke 18 begrenzten Aufnahmeraums als "äußerer Nassraum" bezeichnet werden, in den die Doppelkupplung das Kühlmittel abgibt. Wäre der Torsionsschwingungsdämpfer in diesem "äußeren Nassraum" angeordnet, so könnte ohne gesonderte Maßnahmen dem Torsionsschwingungsdämpfer nicht ohne Weiteres in hinreichender Menge Kühlmittel zugeführt werden.

Die Montage der Antriebseinheit 11 kann beispielsweise in der Weise erfolgen, dass zuerst die Flexplatte 330 samt dem Zahnkranz 310 und dem O-Ring 342 am Motor montiert wird, und dass dann der Deckel bzw. das Dichtblech 28 samt dem Radialwellendichtring 54 montiert werden. Unabhängig hiervon kann die Doppelkupplung 12 samt darin integriertem Torsionsschwingungsdämpfer 300 als vormontierte Einheit am Getriebe montiert werden. Sind sowohl die Flexplatte 330 als auch die Doppelkupplung 12 montiert, können das Getriebe und der Motor zusammengefügt werden einschließlich der Herstellung der Drehlager- und Abdichtverbindung zwischen dem Deckel 28 und dem Koppelflansch 334 unter Vermittlung des Radialwellendichtrings 54 und der Herstellung der Drehmitnahmeverbindung über die Verzahnungen zwischen den beiden Koppelflanschen 334 und 336.

Erwähnt werden sollte noch, dass beim Ausführungsbeispiel der Fig. 3 die Ölpumpe und der Torsionsschwingungsdämpfer parallel geschaltet sind, so dass der Momentenfluss von der Antriebseinheit zur Ölpumpe nicht über den Torsionsschwingungsdämpfer verläuft, im Gegensatz zum Ausführungsbeispiel der Fig. 2, bei dem der Torsionsschwingungsdämpfer 300 und die Ölpumpe in Reihe geschaltet sind.

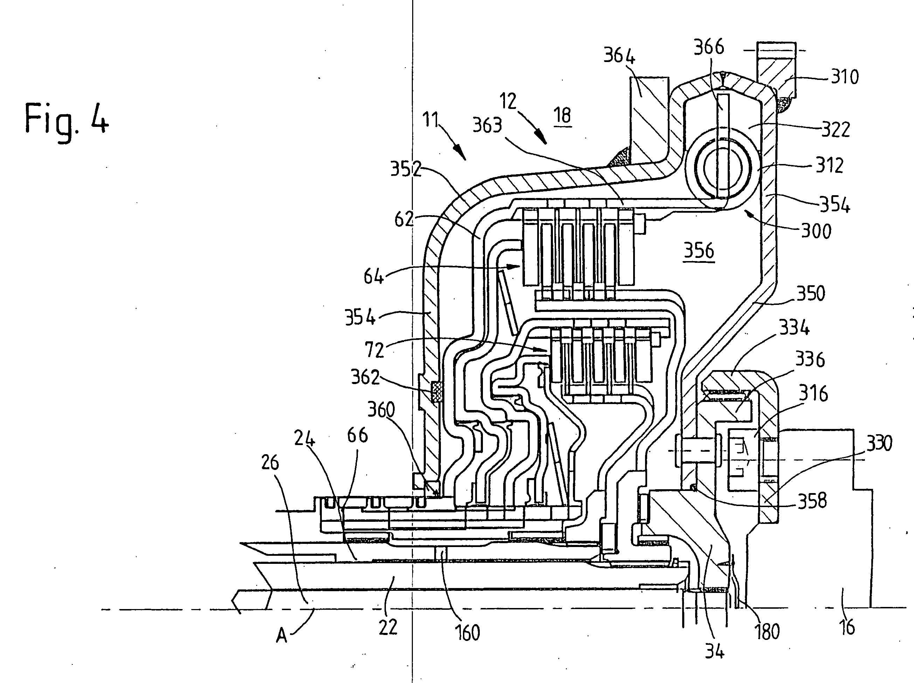

Ein anderes Ausführungsbeispiel einer Doppelkupplung 12 mit darin integriertem Torsionsschwingungsdämpfer 300 ist in Fig. 4 gezeigt. Bei diesem Ausführungsbeispiel weist die Doppelkupplung 12 eine im Wesentlichen aus zwei Halbschalenteilen 350, 352 bestehende Wandung 354 auf, die drehfest an der Kupplungsnabe 34 festgelegt ist und sich dementsprechend mit der Eingangsseite der Doppelkupplung 12 mitdreht bzw. der Eingangsseite zuzurechnen ist. Die Wandung 354 schließt einen Nassraum 356 der Doppelkupplung 12 ein, in dem neben den Lamellen-Kupplungsanordnungen 64 und 72 auch der Torsionsschwingungsdämpfer 300 enthalten ist. Der vorzugsweise zumindest im Betrieb eine Vollfüllung an Kühlmittel, insbesondere Kühlöl, aufnehmende Nassraum 356 ist nach außen durch einen O-Ring 358 und eine Dichtungs- und Drehlageranordnung 360, beispielsweise ein Radialwellendichtring, abgedichtet. Die das getriebeseitige Ende der Punpenwelle 26 aufnehmende, eine mit einer Außenverzahnung des Wellenendes in Drehmitnahmeeingriff stehende Innenverzahnung aufweisende Durchgangsöffnung der Kupplungsnabe 34 ist beim Ausführungsbeispiel der Fig. 4 durch ein an der Nabe 34 angeschweißtes Dichtblech 180 öldicht verschlossen, das insoweit dem Element 180 der Fig. 1 entspricht.

Die Kupplungsnabe 34 ist über die daran beispielsweise festgenietete Halbschale 350 und die daran festgeschweißte Halbschale 352 unter Vermittlung eines Gleitrings 362 am Außenlamellenträger 62 axial in Richtung zur Antriebseinheit abgestützt. Es resultiert wiederum der die Doppelkupplung axial zusammenhaltende geschlossene Kraftfluss. Radial außen an der Halbschale 350 ist ein Anlasserzahnkranz 310 angeschweißt. An der Halbschale 352 ist radial außen ein Zusatzmassenring 364 angeschweißt. Der Anlasserzahnkranz 310 und der Zusatzmassenring 364 erhöhen für den Torsionsschwingungsdämpfer 300 die primärseitige Trägheitsmasse.

Beim Ausführungsbeispiel der Fig. 4 wirkt der Torsionsschwingungsdämpfer 300 zwischen der Wandung 354 und dem ersten Außenlamellenträger 62, wobei die Wandung 354 der Primärseite und der Außenlamellenträger 62 der Sekundärseite des Torsionsschwingungsdämpfers 300 zugeordnet ist. Hierzu bilden die beiden Halbschalen 350 und 352 einen ringförmigen Führungskanal, in dem eine die Dämpferelementenanordnung 312 führende Gleitelementanordnung 322 oder dergleichen aufgenommen ist. Die Dämpferelemente sind zwischen zur Kraftabstützung dienenden Wandungseinbuchtungen und vom Lamellentragabschnitt 363 des Außenlamellenträgers 62 nach radial außen vorstehenden Abstützstegen 366 aufgenommen. Im Betrieb kommt es zu Relativverdrehungen zwischen der Wandung 354 und dem Außenlamellenträger 62 innerhalb des vom Torsionsschwingungsdämpfer 300 zugelassenen Drehwinkels. Diese Relativ-Drehbewegungen werden in einem gewissen Maße durch Reibung am Gleitring 362 gedämpft.

Die Kupplungsnabe 34 weist einen (radial außerhalb der Kurbelwellenschrauben 316 liegenden) Koppelflansch 336 mit einer Außenverzahnung auf, die mit einer Innenverzahnung eines Koppelflansches 334 eines durch die Schraubbolzen (Kurbelwellenschrauben) 316 am Koppelende 16 angebrachten Koppelteils 330 in Drehmitnahmeeingriff steht. Die Verzahnungen sind als Steckverzahnungen ausgeführt, die durch axiale Relativbewegung in gegenseitigen Eingriff bzw. außer Eingriff bringbar sind. Etwaige Taumelbewegungen werden vor allem durch das Koppelteil 330 und in gewissem Maße durch den Flansch 336 der Kupplungsnabe 34 aufgenommen, so dass zum einen das Koppelende 16 bzw. die Kurbelwelle nicht durch Taumelbewegungen und dergleichen belastet wird, insoweit also keine Bruchgefahr besteht, und zum anderen auch die Doppelkupplung und insbesondere deren Torsionsschwingungsdämpfer 300 im Wesentlichen von Taumelbewegungen und Taumelkräften freigehalten wird. Die Taumelbelastung tritt im Wesentlichen nur im Bereich der Steckverzahnung bzw. der Koppelflansche 334, 336 auf.

Der Nassraum 356 ist über zwischen dem Ringteil 66, der Getriebeeingangswelle 24, der Getriebeeingangswelle 22 und der Ölpumpenantriebswelle 26 ausgebildete Ringkanäle an einer Kühlölversorgung angeschlossen, wobei beispielsweise (ähnlich wie beim Ausführungsbeispiel der Fig. 1) ein zwischen dem Ringteil 66 und der Getriebeeingangswelle 24 ausgebildeter erster Ölkanal und ein von diesem abzweigenden, zwischen der Getriebeeingangswelle 24 und der Getriebeeingangswelle 22 ausgebildeter zweiter Ölkanal zur Zufuhr von Kühlöl in den Nassraum 356 dienen und ein zwischen der Getriebeeingangswelle 22 und der Pumpenantriebswelle 26 ausgebildeter dritter Ölkanal zur Abfuhr von Kühlöl aus dem Nassraum 356 dient. Es kann so ein Kühlölkreislauf durch den Nassraum 356 aufrecht erhalten werden, der durch die Lamellen verläuft und so diese wirkungsvoll kühlt. Auch der Torsionsschwingungsdämpfer 300 wird auf diese Weise zuverlässig mit Kühlöl versorgt.

Die Wandung 354 ist hinsichtlich ihrer Formgestaltung gut an den von den verschiedenen Komponenten der Doppelkupplung 12 eingenommenen Raum angepasst, so dass der Nassraum 356 im Falle einer Vollfüllung ein vergleichsweise geringes Ölvolumen enthält und dementsprechend das diesem Ölvolumen zuzurechnende Trägheitsmoment vergleichsweise gering ist. Bei still stehendem Antriebsstrang bzw. Fahrzeug kann zugelassen sein, dass das Öl aus dem radial oberen Bereich des Nassraums 356 in Richtung zum Getriebe abläuft und bei Inbetriebnahme erst wieder mit Öl gefüllt wird.

Zum Ausführungsbeispiel der Fig. 4 ist noch auf Folgendes hinzuweisen. Der Radialwellendichtring 360 läuft nicht mit der Motordrehzahl um, sondern wird nur entsprechend den Relativverdrehungen zwischen der Wandung 254 und dem Außenlamellenträger 62 samt dem Ringteil 66 auf Reibung belastet. Der Torsionsschwingungsdämpfer liegt radial außerhalb der Lamellen der ersten Lamellen-Kupplungsanordnung 64, wobei - wie aus dem Vorangehenden schon klar geworden ist - die Torsionsdämpferkammer von einem Abschnitt des Nassraums der Doppelkupplung gebildet ist. Das primärseitige Trägheitsmoment wird durch radial außen an der Wandung 354 angebrachte Zusatzmassen (Zahnkranz 210 und Massenring 364) erhöht, beispielsweise im Hinblick auf eine Absenkung der Eigenfrequenz des Systems. Zur Verkopplung der Eingangsseite der Doppelkupplung und der Kurbelwelle sind Steckverzahnungen vorgesehen, die radial außerhalb der Kurbelwellenschrauben 316 angeordnet sind, so dass kleinere Zahnkräfte auftreten und die Außenverzahnung am Flansch 336 der Kupplungsnabe 34 leichter herstellbar ist. Durch die axiale Abstützung der Kupplungsnabe 34 über die Wandung 354 am Außenlamellenträger 62 wird ein geschlossener Kraftfluss erreicht, wobei die Abstützung (Gleitring 362) vorzugsweise möglichst weit radial innen liegt, um nennenswerte Kippmomente zu vermeiden.

Die Montage kann beispielsweise auf folgende Weise erfolgen: Es wird das auch als Montageflansch bezeichenbare Koppelelement 330 an dem Koppelende 16 der Kurbelwelle angebracht. Die Doppelkupplung 12 mit dem darin integrierten Torsionsschwingungsdämpfer 300 wird als vormontierte Einheit am Getriebe montiert. Es werden dann das Getriebe und der Motor zusammengefügt unter Herstellung der Drehmitnahmeverbindung an den Verzahnungen der Koppelflansche 334, 336.

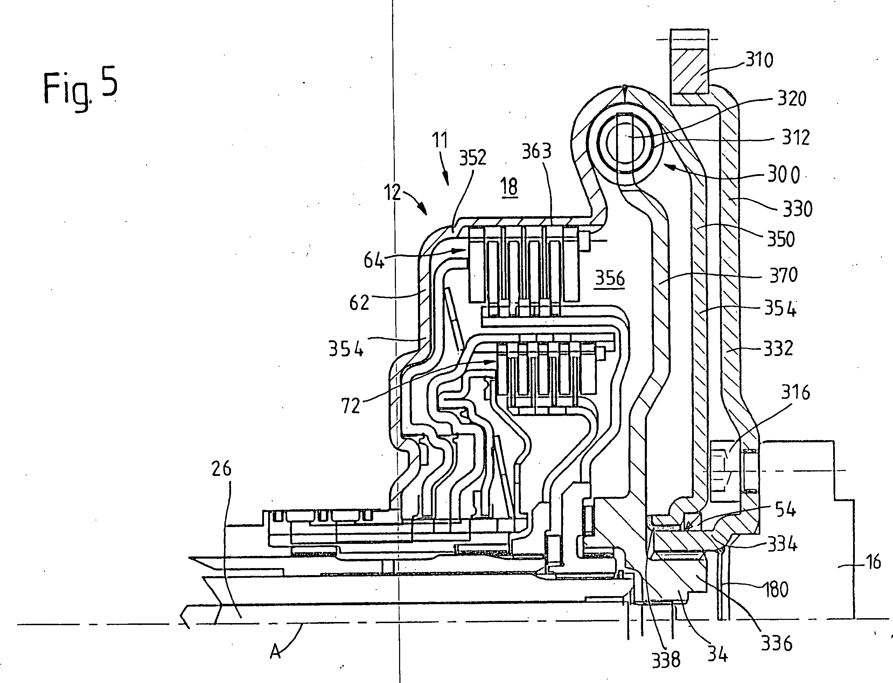

Das Ausführungsbeispiel der Fig. 5 entspricht betreffend die Integration des Torsionsschwingungsdämpfers 300 in die Doppelkupplung 12 in mancher Hinsicht dem Ausführungsbeispiel der Fig. 3. So ist die Dämpferelementenanordnung 312, die wiederum von radial geschachtelten Dämpfungselementen, insbesondere Druckfedern, gebildet ist, einerseits an Radialstegen 320 einer mit der Kupplungsnabe 34 einteiligen (oder alternativ drehfest daran angebrachten) Koppelscheibe 370 und andererseits über ein Momentenübertragungsglied am Außenlamellenträger 62 abgestützt. Als zu dem Momentenübertragungsglied 60 der Fig. 3 korrespondierendes Bauteil dient eine antriebseinheitsseitige Halbschale 350, die mit einer den Außenlamellenträger 62 bildenden Halbschale 352 verbunden ist, um eine den Nassraum 356 begrenzende Wandung 354 zu bilden. Die Halbschale 350 ist wie das Element 60 der Fig. 3 vermittels eines Gleitrings 338 an der Kupplungsnabe 34 axial abgestützt und am Koppelflansch 334 der die Koppelanordnung 330 bildenden Flexplatte 332 radial geführt. Da die Wandung 354 gewissermaßen die Funktion des Deckels 28 mit übernimmt, ist zur Abdichtung ein Radialwellenring 54 zwischen dem radial inneren Randbereich der Halbschale 350 und dem Außenumfang des Koppelflansches 334 wirksam. Eine am Koppelflansch 334 angeschweißte Dichtscheibe 180 sorgt für eine Abdichtung des Ölrücklaufwegs in Richtung zur Antriebseinheit hin.

Wie beim Ausführungsbeispiel der Fig. 4 ermöglicht die Konstruktion der Fig. 5 eine Vollfüllung des Nassraums 356 mit Kühlmittel, insbesondere Kühlöl. Der Außenlamellenträger 62 ist dementsprechend ohne Öldurchlassöffnungen nach radial außen hin ausgeführt. Statt dessen ist im Bereich des Halteabschnitts 363 dafür gesorgt, dass Kühlöl in hinreichender Menge radial außerhalb der Lamellen in axialer Richtung abfließen kann. Wie beim Ausführungsbeispiel der Fig. 4 ist die die Dämpferelementenanordnung 312 aufnehmende Torsionsdämpferkammer von einem Abschnitt des Nassraums 356 gebildet. Die Dämpferelementenanordnung ist radial außerhalb der Lamellen der ersten Lamellen-Kupplungsanordnung 64 angeordnet, so dass Dämpferelemente mit in Umfangsrichtung vergleichsweise großer Länge eingesetzt werden können. Hinsichtlich der Koppelanordnung 330 gilt das zum Ausführungsbeispiel der Fig. 3 Gesagte.

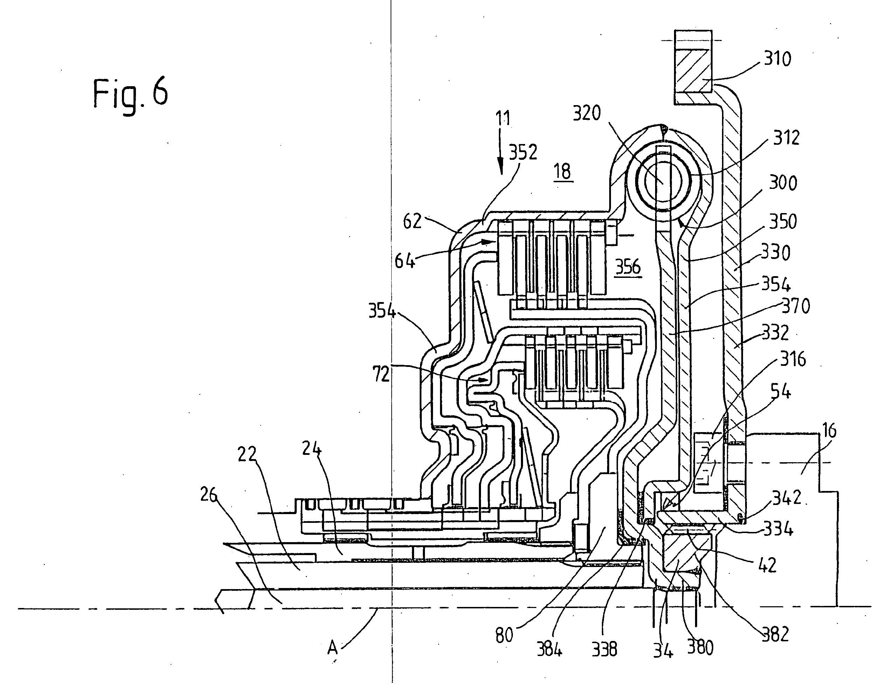

Das Ausführungsbeispiel in Fig. 6 entspricht im Wesentlichen dem Ausführungsbeispiel der Fig. 5. Ein wichtiger Unterschied liegt darin, dass die Kupplungsnabe 34 beim Ausführungsbeispiel der Fig. 6 zweiteilig ausgeführt ist und von einem L-Flanschabschnitt 380 eines die Primärseite des Torsionsschwingungsdämpfers 300 bildenden Koppelscheibenteils 370 und einem daran angeschweißten Ringteil 382 gebildet ist, das die Außenverzahnung 42 aufweist. Der radial innere Bereich des Halbschalenteils 350 ist etwas anders ausgestaltet als beim Ausführungsbeispiel der Fig. 5, aber wie dort über einen Radialwellenring 54 am Koppelflansch 334 der Flexplatte 352 abdichtend geführt und mittels eines Gleitrings 338 an der Primärseite des Torsionsschwingungsdämpfers 300 axial abgestützt. Ein weiterer Gleitring 384 stützt die Koppelscheibe 370 axial am Nabenteil 80 ab, wobei der Gleitring 384 ggf. Radialnuten aufweist, um Kühlöl aus dem Nassraum 356 in Richtung zum zwischen der Pumpenantriebswelle 26 und der Getriebeeingangswelle 22 ausgebildeten Rückfluss-Ringkanal abfließen zu lassen.

Die zweiteilige Ausbildung der Kupplungsnabe 34 gemäß dem Ausführungsbeispiel der Fig. 6 ist gegenüber der einteiligen Ausführung gemäß Fig. 5 herstellungstechnisch vorteilhaft.

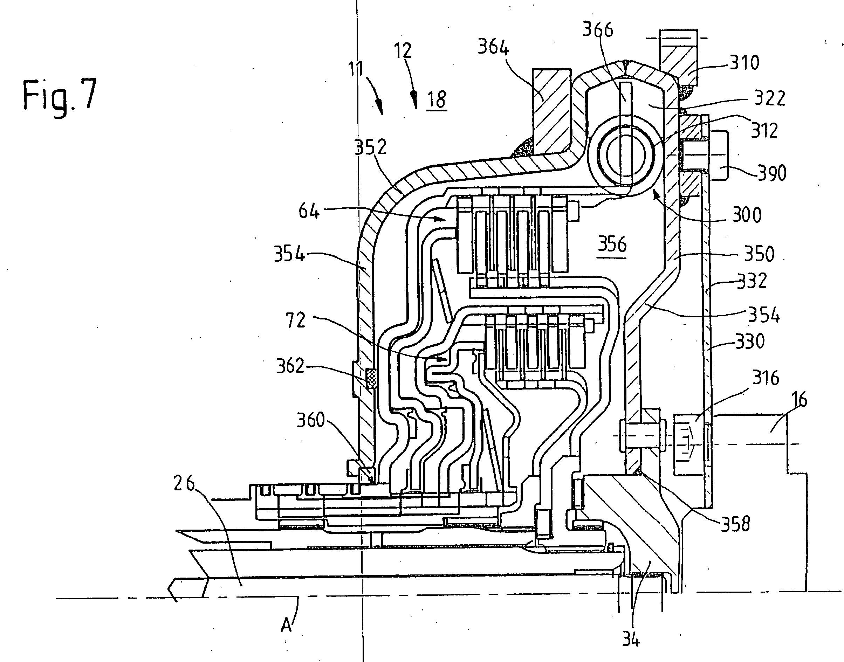

Das Ausführungsbeispiel der Fig. 7 entspricht im Wesentlichen dem Ausführungsbeispiel der Fig. 4. Ein Unterschied liegt darin, dass die Kupplungsnabe 34 mit zur Antriebseinheit hin geschlossener Sackbohrung für das Koppelende der Pumpenantriebswelle 26 ausgeführt ist, so dass auf das Dichtblech 180 verzichtet werden kann. Die Kopplung zwischen dem Koppelende 16 der Kurbelwelle und der Doppelkupplung 12 erfolgt beim Ausführungsbeispiel der Fig. 7 unter Vermittlung einer von einer Flexplatte 332 gebildeten Koppelanordnung 330, die mittels Schrauben 390 im Radialbereich der Dämpferelementenanordnung 312, also radial außerhalb der Lamellen der ersten Lamellen-Kupplungsanordnung 64 an der Wandung 354 angebunden ist. Gegenüber der Verbindung zwischen der Antriebseinheit und der Doppelkupplung über Steckverzahnungen bietet die bei der Konstruktion der Fig. 7 realisierte Verkopplung den Vorteil, dass Taumelbewegungen besonders wirkungsvoll aufgenommen werden können, ohne dass die verkoppelten Bauteile stark durch Taumelbewegungen belastet w[Berden. Durch die Flexplatte 332 wird also eine optimierte Taumelentkopplung der Antriebseinheit von der Doppelkupplung erreicht. Die Flexplatte kann in Abweichung von dem in Fig. 7 gezeigten Ausführungsbeispiel auch Abdichtungsfunktion für den Nassraum 356 und die Ölkanäle nach außen hin übernehmen und beispielsweise in die Wandung 354 direkt einbezogen sein.

Betreffend die Ausführungsbeispiele der Fig. 4 bis 7 ist noch zu betonen, dass die sich mit der Eingangsseite bzw. dem Außenlamellenträger mitdrehende Wandung 354 jeweils ein geschlossenes Gehäuse der Doppelkupplung 12 bildet und deshalb auch als Gehäuse 354 angesprochen werden kann. Grundsätzlich ist es denkbar, dass eine sich mit einer Komponente bzw. Komponenten der Doppelkupplung mitdrehende Wandung vorgesehen ist, die für sich alleine kein abgeschlossenes Gehäuse bildet, sondern zusammen mit einer stationären Wandung einen Nassraum begrenzt. Da eine zur Abdichtung des Nassraums zwischen der sich mitdrehenden Wandung und der stationären Wandung regelmäßig erforderliche Dichtungsanordnung oder dergleichen vergleichsweise stark auf Reibung belastet wird, ist es bevorzugt, die Doppelkupplung mit einem geschlossenen, sich mitdrehenden Gehäuse auszuführen, das den Nassraum 356 begrenzt.

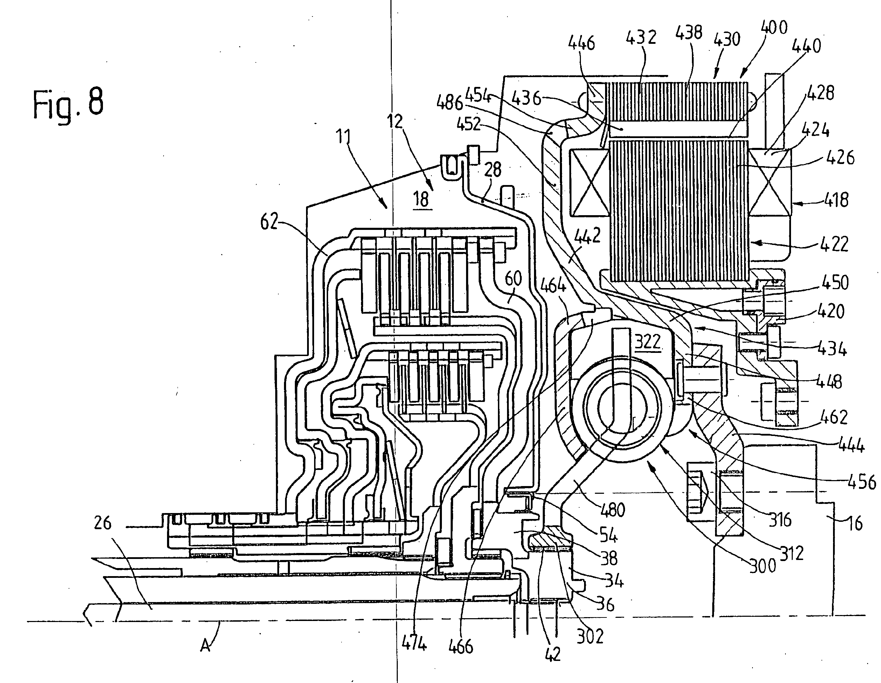

Ein erfindungsgemäßes Antriebssystem ist in Fig. 8 gezeigt. Die Doppelkupplung entspricht im Wesentlichen der Doppelkupplung der Fig. 1 und ist mit einer zweiteiligen, die Teile 36 und 38 aufweisenden Kupplungsnabe 34 ausgeführt.

Das Antriebssystem 11 umfasst neben der Doppelkupplung 12 ferner einen Torsionsschwingungsdämpfer 300 und eine allgemein mit 400 bezeichnete Elektromaschine, beispielsweise ein sogenannter Kurbelwellenstartergenerator. Die Elektromaschine 400 weist eine Statoranordnung 418 auf, die beispielsweise auf einem Statorträger 420 an einem nicht dargestellten Motorblock oder dergleichen getragen sein kann. Die Statoranordnung 418 umfasst einen Statorwechselwirkungsbereich 422 mit einer Mehrzahl von Statorwicklungen 424 und ein Joch bildenden Blechpaketen 426. Die Wicklungsköpfe 428 der Wicklungen 24 stehen seitlich über die Blechpakete 26 über. Die Elektromaschine 400 umfasst ferner eine Rotoranordnung 430 mit einem Rotorwechselwirkungsbereich 432 und einer nachfolgend noch detaillierter beschriebenen Trägeranordnung 434. Der Rotorwechselwirkungsbereich 432 umfasst eine Mehrzahl von an dessen Innenseite getragenen Permanentmagneten 436 sowie Blechpakete 438, die ein Joch des Rotorwechselwirkungsbereichs 432 bilden. Zwischen den Permanentmagneten 36 und dem Statorwechselwirkungsbereich 422 ist ein Luftspalt 440 gebildet, der zum Erhalt einer bestmöglichen Effizienz der Elektromaschine 400 so klein als möglich sein sollte.

Die Trägeranordnung 434 umfasst zwei Trägerelemente 442, 444. Das erste Trägerelement 442, das radial außen mit einem im Wesentlichen sich radial erstreckenden Abschnitt 446 den Rotorwechselwirkungsbereich 432 trägt, ist in einem radial weiter innen liegenden, sich ebenfalls im Wesentlichen radial erstreckenden Abschnitt 448 mit dem zweiten Trägerteil 444 durch eine Mehrzahl von in Umfangsrichtung aufeinander folgenden Nietbolzen oder dergleichen verbunden.

Radial außen anschließend an den sich im Wesentlichen radial erstreckenden Abschnitt 448 weist das erste Trägerelement 442 einen sich in Richtung der Drehachse A und geringfügig nach radial außen erstreckenden Verbindungsabschnitt 450 auf, welcher sich mit dem Statorwechselwirkungsbereich 422 in Achsrichtung überlappt bzw. diesen axial überbrückt. An diesen Verbindungsabschnitt 450 anschließend weist das erste Trägerelement 442 einen sich im Wesentlichen wieder nach radial außen erstreckenden Abschnitt 452 auf, der nach radial außen hin die Wicklungsköpfe 428 überbrückt und in einen sich im Wesentlichen in axialer Richtung erstreckenden, und die Wicklungsköpfe 28 zumindest teilweise in Axialrichtung überbrückenden Abschnitt 454 übergeht, an den sich der im Wesentlichen radial erstreckende Abschnitt 446 anschließt.

Als Primärseite 456 des Torsionsschwingungsdämpfers 300 dient der sich im Wesentlichen radial erstreckende Abschnitt 448 des ersten Trägerelements 442, der einen ersten Deckscheibenbereich 462 der Primärseite bildet. Ein zweiter Deckscheibenbereich 464 der Primärseite ist beispielsweise von einem gesonderten, beispielsweise aus Blech gestanzten und geeignet geformten Element gebildet, das einen sich im Wesentlichen radial erstreckenden Abschnitt 466 aufweist, der in Achsrichtung im Wesentlichen dem Abschnitt 448 des ersten Deckscheibenbereichs 462 gegenüberliegt. Der zweite Deckscheibenbereich 464 könnte grundsätzlich aber auch von in dem ersten Trägerelement 442 definierten und aus diesen entsprechend herausgedrückten Zungenabschnitten oder dergleichen gebildet sein. Handelt es sich um ein gesondertes Blechteil, kann dieses am ersten Trägerelement 442 angeschweißt sein. Auch eine formschlüssige Rastverbindung oder dergleichen ist denkbar.

Um Abrieb der Gleitelementanordnung 322 nach radial außen abgeben zu können, sind Partikelabgabeöffnungen 474 im Übergangsbereich zwischen dem zweiten Deckscheibenbereich 64 und dem Verbindungsabschnitt 450 sowie Partikelabgabeöffnungen 486 im Übergangsbereich zwischen den Abschnitten 452 und 454 vorgesehen.

Als Sekundärseite dient ein Zentralscheibenelement 480, das ein Nabenteil 302 aufweist, das mit einer Innenverzahnung ausgeführt ist, die in die Außenverzahnung 42 eingreift und so die Sekundärseite des Torsionsschwingungsdämpfers 300 an der Eingangsseite der Doppelkupplung 12 ankoppelt. Auf an sich bekannte Weise stützen sich die Dämpferelemente, beispielsweise Dämpferfedern, der Dämpferelementenanordnung 312 einerseits an der Primärseite, beispielsweise an an den Abschnitten 448, 464 und ggf. 450 gebildeten axialen bzw. radialen Ausbauchungen, und andererseits an der Sekundärseite, beispielsweise an Radialstegen des Zentralscheibenelements 480 ab, wobei Federteller als Abstützelemente zur besseren Druckverteilung vorgesehen sein können.

Zu näheren Einzelheiten der Ausbildung der Elektromaschine 400 und des Torsionsschwingungsdämpfers 300 wird auf die deutsche Patentanmeldung Az. 100 06 646.1 vom 15.02.2000 verwiesen.

Das Antriebssystem 11 der Fig. 8 zeichnet sich dadurch aus, dass eine Funktionsintegration für die Elektromaschine und den Torsionsschwingungsdämpfer 300 realisiert ist. Dadurch, dass das erste Trägerelement 442 wenigstens den ersten Deckscheibenbereich 462 der Primärseite bildet, wird die Teilevielfalt reduziert und Bauraum eingespart. Dabei wird eine optimale Raumausnutzung dadurch erreicht, dass der Torsionsschwingungsdämpfer 300 im Wesentlichen radial innerhalb der Statoranordnung 418 angeordnet ist. Die Rotoranordnung 430 bildet eine Primärmasse für den Torsionsschwingungsdämpfer 300, während das Zentralscheibenelement 480 samt den daran angekoppelten Komponenten der Doppelkupplung 12 gewissermaßen eine Sekundärmasse des Torsionsschwingungsdämpfers 300 bildet. Insbesondere der Außenlamellenträger 62 und die daran angeordneten Außenlamellen weisen eine nennenswerte sekundärseitige Trägheitsmasse auf.

Das Antriebssystem der Fig. 8 zeichnet sich, wie schon erwähnt, dadurch aus, dass es durch eine teilemäßige Verschmelzung der Elektromaschine 400 und des Torsionsschwingungsdämpfers 300 nur sehr wenig Bauraum beansprucht. Die Trägeranordnung 434 der Rotoranordnung 430 bildet einen der Kraftabstützung dienenden Bereich des Torsionsschwingungsdämpfers 300, so dass hier beispielsweise auf ein vollständiges separates Deckscheibenelement oder dergleichen verzichtet werden kann. Des Weiteren liegt insbesondere der Bereich 448, 450 der Trägeranordnung 434, welcher den Deckscheibenbereich 462 der Primärseite bildet, im Wesentlichen radial innerhalb der Statoranordnung 418 der als Außenläufermaschine ausgebildeten Elektromaschine 400. Durch die zusätzlich noch vorhandene zumindest teilweise axiale Überlappung der Elektromaschine 400, d. h. insbesondere der Statoranordnung 418 derselben, mit dem Torsionsschwingungsdämpfer 300 bzw. desses Dämpferelementenanordnung 312 wird der in Anspruch genommene Bauraum weiter minimiert.

Der Konstruktion der Fig. 8 liegt folgendes Grundkonzept zugrunde: Die Elektromaschine (Kurbelwellenstartergenerator) und der Torsionsschwingungsdämpfer 300 sind radial ineinander geschachtelt, während die Doppelkupplung axial benachbart dazu angeordnet ist. Der Außendurchmesser der Elektromaschine ist größer als der Außendurchmesser der Doppelkupplung 412, wodurch im Falle einer dem Normalfall entsprechenden kegelförmigen Getriebeglockenausbildung (motorseitig größerer Innendurchmesser, getriebeseitig kleinerer Innendurchmesser) eine optimale Bauraumausnutzung erreicht wird. Die Doppelkupplung liegt mit ihren Lamellen-Kupplungsanordnungen etwa im gleichen Radialbereich bzw. radial außerhalb des Torsionsschwingungsdämpfers.

Gemäß der gezeigten Konstruktion ist der Torsionsschwingungsdämpfer 300 für einen trocken laufenden Betrieb vorgesehen, er ist aber erfindungsgemäß mit wenigstens einer Kammer für die Dämpferelementenanordnung ausgeführt, um einen nasslaufenden Betrieb ähnlich wie bei einem Zwei-Massen-Schwungrad zu ermöglichen.

Wie beim Ausführungsbeispiel der Fig. 2 sind die Ölpumpe und der Torsionsschwingungsdämpfer 300 in Reihe geschaltet, so dass nicht nur die Doppelkupplung 12, sondern auch die Ölpumpe schwingungsgedämpft über den Torsionsschwingungsdämpfer 300 angetrieben wird.

Die Montage erfolgt bevorzugt auf folgende Weise: Eine erste, von der Statoranordnung 418 und dem Statorträger 420 gebildete Einheit und eine zweite, von der Rotoranordnung 430 und der Trägeranordnung 434 und dem Torsionsschwingungsdämpfer 300 gebildete zweite Einheit werden jeweils als vormontierte Einheit an der Antriebseinheit montiert. Ebenso wird die Doppelkupplung 12 als vormontierte Einheit am Getriebe in der Getriebeglocke 18 montiert und der Deckel 28 unter Anordnung des Radialwellendichtrings 54 zwischen dem radial inneren Flansch des Deckels und der Kupplungsnabe 36 in Stellung gebracht. Danach werden das Getriebe und die Antriebseinheit zusammengefügt, wobei die Innenverzahnung des Nabenteils 302 der Sekundärseite und die Außenverzahnung 42 der Kupplungsnabe 34 in gegenseitigen Eingriff gebracht werden.

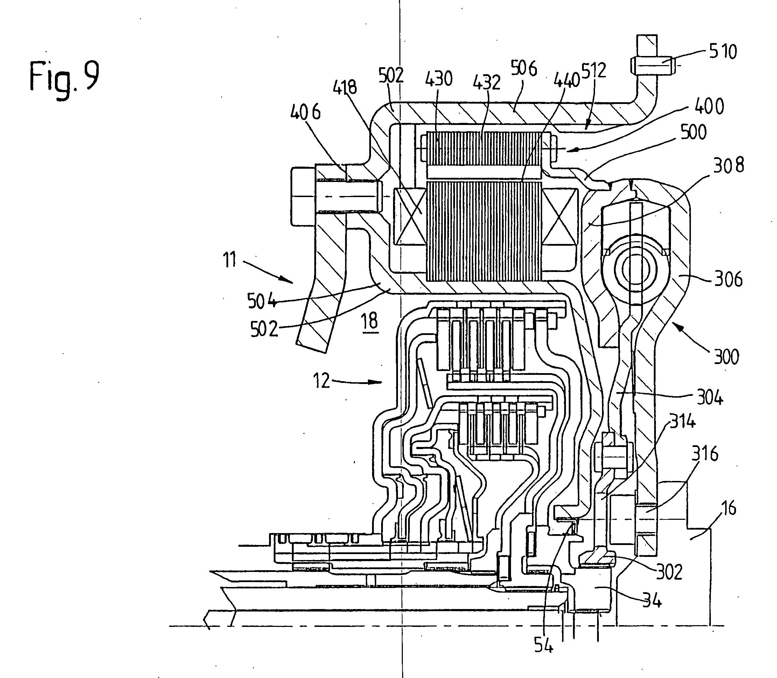

Das Antriebssystem 11 der Fig. 9 entspricht hinsichtlich der Doppelkupplung 12 und dem Torsionsschwingungsdämpfer 300 im Wesentlichen dem Ausführungsbeispiel der Fig. 2. Auf einen Anlasserzahnkranz 310 ist beim gezeigten Ausführungsbeispiel aber verzichtet. Statt dessen weist das Antriebssystem 11 eine beispielsweise als Kurbelwellenstatorgenerator dienende Elektromaschine 400 auf, deren Rotoranordnung 430 mittels einem Tragring oder Tragelementen 500 an der von den Deckblechen 306, 308 gebildeten Primärseite des Torsionsschwingungsdämpfers 300 gehalten ist. Ein am Getriebe angebrachter Statorträger 502, beispielsweise ein Guss- oder Ziehteil, trägt die radial außerhalb der Doppelkupplung 12 angeordnete Statoranordnung 418. Der Statorträger weist einen radial unteren Abschnitt 504 und einen radial oberen Abschnitt 506 auf, zwischen denen die Statoranordnung 418 und die Rotoranordnung 430 angeordnet sind. Der mit 406 bezeichnete Fügespalt zwischen dem Statorträger 502 und der Getriebegehäuseglocke ist abgedichtet. Ferner ist ein Radialwellendichtring 54 zwischen der Kupplungsnabe 34 und einem radial inneren Flasch des Statorträgers 502 wirksam. Der Statorträger 502 ersetzt somit den Deckel 28 des Ausführungsbeispiels der Fig. 1 und begrenzt den die Doppelkupplung aufnehmenden Aufnahmeraum 18, der als Nassraum dient.

Der Statorträger 502 kann über Passstifte 510 an der Antriebseinheit (Motor) zentriert sein und kann an der Antriebseinheit angeschraubt sein. Das Getriebegehäuse kann an der Antriebseinheit oder/und am Statorträger befestigt sein, und zwar radial innerhalb oder/und radial außerhalb des Luftspalts 440 der Elektromaschine 400. Die Montage der Antriebseinheit 11 der Fig. 9 erfolgt am besten auf folgende Weise: Der Torsionsschwingungsdämpfer 300 samt der Rotoranordnung 430 wird an der Kurbelwelle anmontiert. Es wird dann der Statorträger 502 samt der Statoranordnung 418 an der Antriebseinheit montiert, wofür der Statorträger eine Führungsschiene 512 aufweist, die über die Rotoranordnung 430 gleitet. Unabhängig davon wird die Doppelkupplung 12 in die Gehäuseglocke des Getriebes eingesetzt. Danach werden das Getriebe und die Antriebseinheit (der Motor) zusammengefügt, wobei einerseits die den Torsionsschwingungsdämpfer mit der Doppelkupplung verkoppelten Verzahnungen in gegenseitigen Eingriff gebracht werden und andererseits der Radialwellendichtring 54 ordnungsgemäß zwischen dem inneren Flansch des Statorträgers 502 und der Kupplungsnabe 34 angeordnet wird.

Es wird noch darauf hingewiesen, dass beim gezeigten Ausführungsbeispiel die Verzahnung zwischen dem Nabenteil 302 und der Kupplungsnabe 34 radial innerhalb der Kurbelwellenschrauben 316 angeordnet ist, um die radiale Abmessung der Kupplungsnabe 34 und dementsprechend der Durchmesser des Radialwellendichtrings 54 vergleichsweise klein zu halten, so dass Reibungsverluste und der Verschleiß des Radialwellendichtrings minimiert werden.

Eine andere Möglichkeit für die Montage ist, dass der Torsionsschwingungsdämpfer 300 samt der Rotoranordnung 430 und der Statoranordnung 418 einschließlich dem Statorträger 502 als vormontierte Einheit an der Kurbelwelle bzw. dem Motorblock angeschraubt werden, wobei eine radiale Verriegelung der Rotoranordnung 430 einerseits und der Statoranordnung 418 andererseits vorteilhaft vorgesehen werden könnte. In Abweichung von der gezeigten Ausführungsform müsste der Innendurchmesser des Radialwellendichtrings bzw. dessen Sitz am Statorträger 502 radial außerhalb der Kurbelwellenverschraubung 316 liegen, um das erste Deckblech 306 am Koppelende 16 der Kurbelwelle anbringen zu können (andernfalls wären die Schrauben 316 nicht zugänglich). Unabhängig hiervon wird die Doppelkupplung 12 am Getriebe montiert. Anschließend werden das Getriebe und die Antriebseinheit zusammengefügt mit Verschraubung des Getriebes am Statorträger 502.

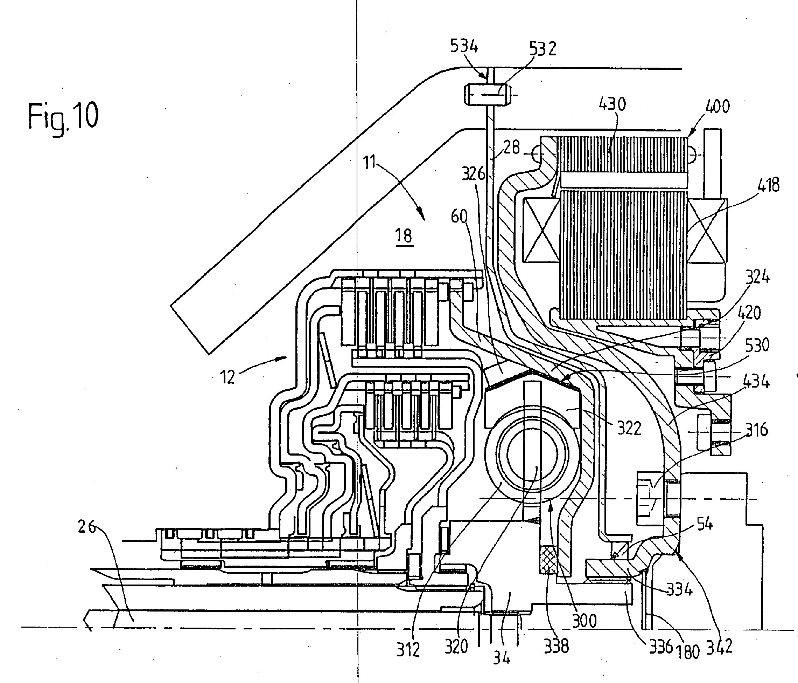

Das Ausführungsbeispiel der Fig. 10 entspricht hinsichtlich der Doppelkupplung 12 und der Integration des Torsionsschwingungsdämpfers 300 darin im Wesentlichen dem Ausführungsbeispiel der Fig. 3, so dass auf die Ausführungen zu dieser Figur verwiesen werden kann. Erwähnt werden sollte noch, dass die Gleitelemente und Federschuhe 322 in einer Gleitschale 530 geführt sind, um die bei Relativverdrehungen zwischen der Kupplungsnabe 34 und dem Momentenübertragungsglied 60 im Torsionsschwingungsdämpfer auftretende Reibung zu minimieren. Anstelle der Flexplatte 332 ist eine Trägeranordnung 434 an der Kurbelwelle angeschraubt, die die Rotoranordnung 430 einer Elektromaschine 400 trägt. Die Elektromaschine 400 entspricht der Elektromaschine 400 der Fig. 20, wenn man davon absieht, dass gemäß Fig. 10 der Torsionsschwingungsdämpfer 300 nicht mit der Elektromaschine integriert ist, sondern in die Doppelkupplung 12 integriert ist. Die Trägeranordnung 434 erfüllt also nur noch insoweit eine Doppelfunktion, als dass sie einen Koppelflansch 334 aufweist, der über Verzahnungen mit dem Koppelflansch 336 der Kupplungsnabe 34 koppelt. Auch beim Ausführungsbeispiel der Fig. 22 ist der Torsionsschwingungsdämpfer 300 radial innerhalb der Statoranordnung 418 angeordnet und überlappt sich teilweise axial mit dieser.

Erwähnt werden sollte noch, dass bei 342 ein O-Ring vorgesehen seien könnte, insbesondere wenn auf das eingeschweißte Dichtblech 180 verzichtet wird.

Der Deckel 28 ist mittels Passstiften 532 am Getriebe zentriert und in einen Fügespalt zwischen Getriebe und Antriebseinheit aufgenommen. Zum Getriebe hin ist der Fügespalt bei 534 abgedichtet, so dass der als "äußerer Nassraum" dienende Aufnahmeraum hinreichend zur Antriebseinheit hin abgedichtet ist.

Es soll noch auf folgende Möglichkeiten hingewiesen werden: Beim gezeigten Ausführungsbeispiel ist die Dichtscheibe 180 am Koppelflansch 334 angeschweißt. Sie könnte aber auch eingeklipst sein. Die Gleitschale 530 braucht nicht zwingend mit Gleitelementen und dergleichen kombiniert sein, die Dämpfungselemente, insbesondere Dämpferfedern, können auch direkt in die Gleitschale aufgenommen sein. Betreffend den zwischen dem Deckel 28 und dem Koppelflansch 334 angeordneten Radialwellendichtring wurde bei der in Fig. 22 gezeigten Ausführungsform der Durchmesser sehr gering gehalten; dieser liegt noch innerhalb der Kurbelwellenschrauben 316. Hierdurch werden Reibungsverluste und Verschleiß am Radialwellendichtring minimiert. Wie schon erwähnt wurde, dient der Träger 434 für die Rotoranordnung 430 gleichzeitig als Abtriebselement zur Ankopplung der Eingangsseite der Doppelkupplung, die der Primärseite des Torsionsschwingungsdämpfers entspricht. Unter Vermittlung der Kupplungsnabe 34 ist auch die Antriebswelle 26 der Ölpumpe an diesem Abtriebselement angekoppelt, wobei der Momentenfluss zur Pumpe nicht über den Torsionsschwingungsdämpfer verläuft.

Die Montage des Antriebssystems 11 in einem Antriebssstrang kann zweckmäßig beispielsweise auf folgende Weise erfolgen: Es wird die Statoranordnung 418 am Motorblock montiert. Anschließend wird der Rotorträger 434 samt der daran angebrachten Rotoranordnung 430 an der Kurbelwelle montiert. Anschließend wird das Dichtblech 28 mit dem Radialwellendichtring 54 in Stellung gebracht und am Motor montiert. Unabhängig davon wird die Doppelkupplung 12 mit dem darin integriertem Torsionsschwingungsdämpfer 300 als vormontierte Einheit am Getriebe in der Getriebeglocke montiert. Schließlich werden das Getriebe und der Motor zusammengefügt unter Herstellung der Drehmitnahmeverbindung zwischen den Koppelflanschen 334 und 336.

Weitere Einzelheiten der Doppelkupplungen 12 bzw. des Antriebssystems gemäß den verschiedenen Ausführungsbeispielen und insbesondere Unterschiede zwischen den verschiedenen Doppelkupplungen sind vom Fachmann ohne Weiteres den Figuren entnehmbar.

## Patentansprüche

1. Antriebssystem, insbesondere zur Eingliederung in einen Antriebsstrang eines Kraftfahrzeugs, der eine Antriebskraft zwischen einer Antriebseinheit, ggf. einer Brennkraftmaschine, und angetriebenen Rädern übertragen kann, umfassend:
- eine Mehrfach-Kupplungseinrichtung (12), ggf. Doppel-Kupplungseinrichtung (12), die bezogen auf eine Referenz-Momentenflussrichtung eine ggf. der Antriebseinheit zugeordnete Eingangsseite (34; 354) und wenigstens zwei ggf. einem Getriebe des Antriebsstrangs zugeordnete Ausgangsseiten (80, 84) aufweist und die ansteuerbar ist, Drehmoment zwischen der Eingangsseite einerseits und einer ausgewählten der Ausgangsseiten andererseits zu übertragen;
sowie umfassend eine Torsionsschwingungsdämpferanordnung (300), die bezogen auf die Referenz-Momentenflussrichtung eine Primärseite (306, 308; 448, 450, 464; 34, 320; 370; 354) und eine gegen die Wirkung einer Dämpferelementenanordnung (312) um eine der Torsionsschwingungsdämpferanordnung und der Mehrfach-Kupplungseinrichtung gemeinsame Achse (A) bezüglich der Primärseite drehbare Sekundärseite (304; 480; 60; 354; 62) aufweist, wobei von der Primärseite und der Sekundärseite eine mit der Eingangsseite (34) im Sinne einer Drehmitnahmeverbindung gekoppelt oder koppelbar ist oder dieser entspricht,
wobei das Antriebssystem (11) ein einer Antriebseinheit zugeordnetes erstes Teilsystem (330; 300; 434, 430) und ein einem Getriebe zugeordnetes zweites Teilsystem (12) aufweist, wobei das erste Teilsystem die Torsionsschwingungsdämpferanordnung (300) und das zweite Teilsystem die Mehrfach-Kupplungseinrichtung (12) aufweist,
**dadurch gekennzeichnet,**
**dass** zur Eingliederung des Antriebssystems in einen Antriebsstrang zwischen der Antriebseinheit und dem Getriebe zuerst das erste Teilsystem (330; 300; 434, 430) als vormontierte Einheit an der Antriebseinheit anmontierbar und das zweite Teilsystem (12) als vormontierte Einheit am Getriebe anmontierbar sind und dass dann das Getriebe mit dem daran angeordneten ersten Teilsystem und die Antriebseinheit mit dem daran angeordnetem zweiten Teilsystem unter Verkopplung der beiden Teilsysteme zusammenfügbar sind, wobei das erste Teilsystem ein erstes Koppelglied (302; 334)mit einer Innenverzahnung und das zweite Teilsystem ein zweites Koppelglied (34) mit einer Außenverzahnung (42) aufweist, die durch im wesentlichen axiale Relativbewegung bezogen auf eine den Teilsystemen gemeinsame Achse in gegenseitigen Drehmitnahmeeingriff zur Verkoppelung der beiden Teilsysteme beim Zusammenfügen des Getriebes und der Antriebseinheit bringbar sind und dass die Torsionsschwingungsdämpferanordnung (300) mit einer Kammer für die Dämpferelementenanordnung (312) ausgeführt ist, um einen nasslaufenden Betrieb zu ermöglichen.

2. Antriebssystem nach Anspruch 1, **dadurch gekennzeichnet, dass** das Antriebssystem eine Elektromaschine (400) umfasst durch welche eine der Eingangsseite zugeordnete Komponente (34) zur Drehung um eine der Elektromaschine (400) und der Kupplungseinrichtung (12) gemeinsame Achse (A) antreibbar oder/und bei Drehung der Komponente (34) um die Achse elektrische Energie gewinnbar ist, wobei die Elektromaschine eine Statoranordnung (418) mit einem Statorwechselwirkungsbereich (422) und eine Rotoranordnung (430) mit einem Rotorwechselwirkungsbereich (432) umfasst wobei der Rotorwechselwirkungsbereich (432) durch eine Trägeranordnung (434) zur gemeinsamen Drehung mit der der Eingangsseite zugeordneten Komponente (34) gekoppelt oder koppelbar ist.

3. Antriebssystem nach einem der Ansprüche 1 bis 2, **dadurch gekennzeichnet, dass** die Mehrfach-Kupplungseinrichtung (12) eine einer ersten Getriebeeingangswelle (22) eines Getriebes des Antriebsstrangs zugeordnete erste Kupplungsanordnung (64) und eine einer zweiten Getriebeeingangswelle (24) des Getriebes zugeordnete zweite Kupplungsanordnung (72) aufweist zur Momentenübertragung zwischen der Antriebseinheit und dem Getriebe, wobei vorzugsweise von den Getriebeeingangswellen wenigstens eine als Hohlwelle (22, 24) ausgebildet ist und eine (22) der Getriebeeingangswellen durch die andere, als Hohlwelle ausgebildete Getriebeeingangswelle (24) verläuft.

4. Antriebssystem nach einem der Ansprüche 1 bis 3, dass das Antriebssystem wenigstens ein Bauteil aufweist, welches funktionsmäßig oder/und strukturell oder/und zumindest bereichsweise räumlich in wenigstens zwei von der Mehrfach-Kupplungseinrichtung (12), der Torsionsschwingungsdämpferanordnung (300) und der Elektromaschine (400), wenn vorhanden, integriert ist.

5. Antriebssystem nach Anspruch 2 und 4, **dadurch gekennzeichnet, dass** die Trägeranordnung (434) wenigstens einen Teil der Primärseite oder der Sekundärseite bildet.

6. Antriebssystem nach Anspruch 5, **dadurch gekennzeichnet, dass** von der Primärseite und der Sekundärseite eine Seite, vorzugsweise die Primärseite, zwei wenigstens bereichsweise in axialem Abstand zueinander liegende, gewünschtenfalls als Deckscheibenbereiche ausgeführte Kraftabstützbereiche (448, 466) aufweist, und dass die Trägeranordnung (434) wenigstens einen (448) der Kraftabstützbereiche bildet.

7. Antriebssystem nach einem der Ansprüche 5 oder 6, **dadurch gekennzeichnet, dass** die Mehrfach-Kupplungseinrichtung (12) axial benachbart zu einem die Elektromaschine (400) und die Torsionsschwingungsdämpferanordnung (300) aufweisenden Subsystem des Antriebssystems (11) angeordnet ist und sich vorzugsweise über etwa den gleichen oder einen kleineren Radialbereich wie dieses Subsystem erstreckt.

8. Antriebssystem nach einem der Ansprüche 5 oder 6, **dadurch gekennzeichnet, dass** die Mehrfach-Kupplungseinrichtung (12) radial innerhalb der Statoranordnung (418) oder/und der Rotoranordnung (430) liegt und sich vorzugsweise wenigstens bereichsweise axial mit dieser überlappt.

9. Antriebssystem nach Anspruch 4, **dadurch gekennzeichnet, dass** die Torsionsschwingungsdämpferanordnung in wenigstens einen Momentenübertragungsweg zwischen der Eingangsseite, ggf. der Kupplungseinrichtungsnabe (34), und wenigstens einer der Ausgangsseiten (80, 84) der Mehrfach-Kupplungseinrichtung (12) integriert ist.

10. Antriebssystem nach einem der Ansprüche 1 bis 9, **dadurch gekennzeichnet, dass** die Mehrfach-Kupplungseinrichtung (12) eine nasslaufende Kupplungseinrichtung ist und eine den Nassraum begrenzende Wandung (28) aufweist.

11. Antriebssystem nach Anspruch 10, **dadurch gekennzeichnet, dass** die Dämpferelementenanordnung (312) der Torsionschwingungsdämpferanordnung im Radialbereich einer/der radial äußeren Lamellen-Kupplungsanordnung (64) der Mehrfach-Kupplungseinrichtung (12) angeordnet ist.

12. Verfahren zur Montage eines Antriebssystems nach einem der Ansprüche 1 bis 11, wobei das Antriebssystem (11) ein einer Antriebseinheit zugeordnetes erstes Teilsystem (330; 300; 434, 430) und ein einem Getriebe zugeordnetes zweites Teilsystem (12) aufweist, **dadurch gekennzeichnet,**
**dass** zur Eingliederung des Antriebssystems in einen Antriebsstrang zwischen der Antriebseinheit und dem Getriebe zuerst das erste Teilsystem (330; 300; 434, 430) als vormontierte Einheit an der Antriebseinheit montiert wird das zweite Teilsystem (12) als vormontierte Einheit am Getriebe montiert wird und dass dann das Getriebe mit dem daran angeordneten ersten Teilsystem und die Antriebseinheit mit dem daran angeordnetem zweiten Teilsystem unter Verkopplung der beiden Teilsysteme zusammengefügt werden, wobei das erste Teilsystem ein erstes Koppelglied (302; 334)mit einer Innenverzahnung und das zweite Teilsystem ein zweites Koppelglied (34) mit einer Außenverzahnung (42) aufweist, die durch im wesentlichen axiale Relativbewegung bezogen auf eine den Teilsystemen gemeinsame Achse in gegenseitigen Drehmitnahmeeingriff gebracht werden zur Verkoppelung der beiden Teilsysteme beim Zusammenfügen des Getriebes und der Antriebseinheit.

## Claims

1. Drive system, in particular for incorporation into a drivetrain of a motor vehicle, which drivetrain can transmit a drive force between a drive unit, if appropriate an internal combustion engine, and driven wheels, comprising:
- a multi-clutch device (12), if appropriate dual clutch device (12), which, in relation to a reference torque flow direction, has an input side (34; 354) assigned if appropriate to the drive unit and at least two output sides (80, 84) assigned if appropriate to a gearbox of the drivetrain, and which can be actuated so as to transmit torque between the input side on the one hand and a selected one of the output sides on the other hand;
and also comprising a torsional vibration damper arrangement (300) which, in relation to the reference torque flow direction, has a primary side (306, 308; 448, 450, 464; 34, 320; 370; 354) and a secondary side (304; 480; 60; 354; 62) which is rotatable relative to the primary side counter to the action of a damper element arrangement (312) about an axis (A) which is common to the torsional vibration damper arrangement and the multi-clutch device, wherein, of the primary side and the secondary side, one is or can be coupled to the input side (34) in the sense of a rotationally driving connection or corresponds to said input side (34),
with the drive system (11) having a first partial system (330; 300; 434, 430) which is assigned to a drive unit and having a second partial system (12) which is assigned to a gearbox, with the first partial system having the torsional vibration damper arrangement (300) and the second partial system having the multi-clutch device (12),
**characterized**
**in that**, to incorporate the drive system into a drivetrain between the drive unit and the gearbox, firstly the first partial system (330; 300; 434, 430) can be mounted as a pre-assembled unit on the drive unit and the second partial system (12) can be mounted as a pre-assembled unit on the gearbox, and in that the gearbox with the first partial system arranged thereon and the drive unit with the second partial system arranged thereon can then be joined together such that the two partial systems are coupled together, with the first partial system having a first coupling member (302; 334) with an internal toothing and with the second partial system having a second coupling member (34) with an external toothing (42), which internal toothing and external toothing can, by means of a substantially axial relative movement in relation to an axis which is common to the partial systems, be placed in rotationally driving connection with one another in order to couple the two partial systems together when the gearbox and the drive unit are joined together, and in that the torsional vibration damper arrangement (300) is formed with a chamber for the damper element arrangement (312) in order to enable wet-running operation.

2. Drive system according to Claim 1, **characterized in that** the drive system comprises an electric machine (400) by means of which a component (34) assigned to the input side can be driven in rotation about an axis (A) which is common to the electric machine (400) and the clutch device (12) and/or electrical energy can be recovered in the event of rotation of the component (34) about the axis, with the electric machine comprising a stator arrangement (418) with a stator interaction region (422) and a rotor arrangement (430) with a rotor interaction region (432), wherein by means of a carrier arrangement (434), the rotor interaction region (432) is or can be coupled, for common rotation, to the component (34) assigned to the input side.

3. Drive system according to one of Claims 1 to 2, **characterized in that** the multi-clutch device (12) has a first clutch arrangement (64) assigned to a first gearbox input shaft (22) of a gearbox of the drivetrain, and a second clutch arrangement (72) assigned to a second gearbox input shaft (24) of the gearbox, in order to transmit torque between the drive unit and the gearbox, wherein of the gearbox input shafts, preferably at least one is designed as a hollow shaft (22, 24) and one (22) of the gearbox input shafts runs through the other gearbox input shaft (24) which is designed as a hollow shaft.

4. Drive system according to one of Claims 1 to 3, **characterized in that** the drive system has at least one component which is functionally and/or structurally and/or at least in regions spatially integrated into at least two of the multi-clutch device (12), the torsional vibration damper arrangement (300) and the electric machine (400), if present.

5. Drive system according to Claims 2 and 4, **characterized in that** the carrier arrangement (434) forms at least a part of the primary side or of the secondary side.

6. Drive system according to Claim 5, **characterized in that**, of the primary side and the secondary side, one side, preferably the primary side, has two force support regions (448, 466) which are situated at an axial distance from one another at least in regions and which are optionally formed as cover disc regions, and **in that** the carrier arrangement (434) forms at least one (448) of the force support regions.

7. Drive system according to one of Claims 5 and 6, **characterized in that** the multi-clutch device (12) is arranged axially adjacent to a subsystem, which has the electric machine (400) and the torsional vibration damper arrangement (300), of the drive system (11) and extends preferably over approximately the same radial region as or a smaller radial region than said subsystem.

8. Drive system according to one of Claims 5 and 6, **characterized in that** the multi-clutch device (12) is situated radially within, and preferably axially overlaps at least in regions, the stator arrangement (418) and/or the rotor arrangement (430).

9. Drive system according to Claim 4, **characterized in that** the torsional vibration damper arrangement is integrated in at least one torque transmission path between the input side, if appropriate the clutch device hub (34), and at least one of the output sides (80, 84) of the multi-clutch device (12).

10. Drive system according to one of Claims 1 to 9, **characterized in that** the multi-clutch device (12) is a wet-running clutch device and has a wall which delimits the wet space.

11. Drive system according to Claim 10, **characterized in that** the damper element arrangement (312) of the torsional vibration damper arrangement is arranged in the radial region of a/the radially outer multiplate clutch arrangement (64) of the multi-clutch device (12).

12. Method for assembling a drive system according to one of Claims 1 to 11, with the drive system (11) having a first partial system (330; 300; 434, 430) assigned to a drive unit and having a second partial system (12) assigned to a gearbox,
**characterized**
**in that**, to incorporate the drive system into a drivetrain between the drive unit and the gearbox, firstly the first partial system (330; 300; 434, 430) is mounted as a pre-assembled unit on the drive unit and the second partial system (12) is mounted as a pre-assembled unit on the gearbox, and in that the gearbox with the first partial system arranged thereon and the drive unit with the second partial system arranged thereon are then joined together such that the two partial systems are coupled together, with the first partial system having a first coupling member (302; 334) with an internal toothing and with the second partial system having a second coupling member (34) with an external toothing (42), which internal toothing and external toothing, by means of a substantially axial relative movement in relation to an axis which is common to the partial systems, are placed in rotationally driving connection with one another in order to couple the two partial systems together when the gearbox and the drive unit are joined together.

## Revendications

1. Système d'entraînement, notamment destiné à être incorporé dans une chaîne cinématique d'un véhicule automobile, qui peut transmettre une force d'entraînement entre une unité d'entraînement, éventuellement un moteur à combustion interne, et des roues motrices, comprenant :
- un dispositif d'embrayages multiples (12), éventuellement un dispositif à double embrayage (12), qui présente, par rapport au sens du flux d'un couple de référence, un côté d'entrée (34 ; 354) associé éventuellement à l'unité d'entraînement et au moins deux côtés de sortie (80, 84) associés éventuellement à une boîte de vitesses de la chaîne cinématique et qui peut être commandé pour transmettre le couple entre le côté d'entrée d'une part et l'un, sélectionné, des côtés de sortie d'autre part ;
et comprenant un agencement d'amortisseur des oscillations de torsion (300), qui par rapport au sens du flux d'un couple de référence, présente un côté primaire (306, 308 ; 448, 450, 464 ; 34, 320 ; 370 ; 354) et un côté secondaire (304 ; 480 ; 60 ; 354 ; 62) pouvant tourner par rapport au côté primaire autour d'un axe (A) commun à l'agencement d'amortisseur des oscillations de torsion et au dispositif d'embrayages multiples à l'encontre de l'action d'un agencement d'éléments amortisseurs (312), l'un du côté primaire ou du côté secondaire étant accouplé ou pouvant être accouplé, ou correspondant au côté d'entrée (34) dans le sens d'une connexion par entraînement en rotation,
le système d'entraînement (11) présentant un premier système partiel (330 ; 300 ; 434, 430) associé à une unité d'entraînement et un deuxième système partiel (12) associé à une boîte de vitesses, le premier système partiel présentant l'agencement d'amortisseur des oscillations de torsion (300) et le deuxième système partiel présentant le dispositif d'embrayages multiples (12),
**caractérisé en ce que**
pour l'incorporation du système d'entraînement dans une chaîne cinématique entre l'unité d'entraînement et la boîte de vitesses, le premier système partiel (330 ; 300 ; 434, 430) peut d'abord être monté en tant qu'unité prémontée sur l'unité d'entraînement, et le deuxième système partiel (12) peut être monté en tant qu'unité prémontée sur la boîte de vitesses, et **en ce qu'**ensuite la boîte de vitesses avec le premier système partiel monté dessus, et l'unité d'entraînement avec le deuxième système partiel monté dessus, peuvent être assemblées en accouplant les deux systèmes partiels, le premier système partiel présentant un premier organe d'accouplement (302 ; 334) avec une denture interne et le deuxième système partiel présentant un deuxième organe d'accouplement (34) avec une denture externe (42), qui par un mouvement relatif essentiellement axial par rapport à un axe commun aux systèmes partiels, peuvent être amenés en prise d'entraînement en rotation mutuelle pour l'accouplement des deux systèmes partiels lors de l'assemblage de la boîte de vitesses et de l'unité d'entraînement, et **en ce que** l'agencement d'amortisseur des oscillations de torsion (300) est réalisé avec une chambre pour l'agencement d'éléments amortisseurs (312) afin de permettre un fonctionnement humide.

2. Système d'entraînement selon la revendication 1, **caractérisé en ce que** le système d'entraînement comprend un moteur électrique (400), qui permet d'entraîner un composant (34) associé au côté d'entrée pour la rotation autour d'un axe (A) commun au moteur électrique (400) et au dispositif d'embrayage (12) et/ou d'obtenir de l'énergie électrique lors de la rotation du composant (34) autour de l'axe, le moteur électrique comprenant un agencement de stator (418) avec une plage d'interaction statorique (422) et un agencement de rotor (430) avec une plage d'interaction rotorique (432), la plage d'interaction rotorique (432) étant accouplée ou pouvant être accouplée par un agencement de support (434), en vue d'une rotation commune, au composant (34) associé au côté d'entrée.

3. Système d'entraînement selon l'une quelconque des revendications 1 à 2, **caractérisé en ce que** le dispositif d'embrayages multiples (12) présente un premier agencement d'embrayage (64) associé à un premier arbre d'entrée de boîte de vitesses (22) d'une boîte de vitesses de la chaîne cinématique et un deuxième agencement d'embrayage (72) associé à un deuxième arbre d'entrée de boîte de vitesses (24) de la boîte de vitesses, pour le transfert de couple entre l'unité d'entraînement et la boîte de vitesses, au moins l'un des arbres d'entrée de boîte de vitesses étant réalisé sous forme d'arbre creux (22, 24) et l'un (22) des arbres d'entrée de boîte de vitesses s'étendant à travers l'autre arbre d'entrée de boîte de vitesses (24) réalisé sous forme d'arbre creux.

4. Système d'entraînement selon l'une quelconque des revendications 1 à 3, **caractérisé en ce que** le système d'entraînement présente au moins un composant qui est intégré fonctionnellement et/ou structurellement et/ou au moins en partie spatialement dans au moins deux du dispositif d'embrayages multiples (12), de l'agencement d'amortisseur des oscillations de torsion (300) et du moteur électrique (400), le cas échéant.

5. Système d'entraînement selon les revendications 2 et 4, **caractérisé en ce que** l'agencement de support (434) forme au moins une partie du côté primaire ou du côté secondaire.

6. Système d'entraînement selon la revendication 5, **caractérisé en ce qu'**un côté, le côté primaire ou le côté secondaire, de préférence le côté primaire, présente deux régions de support de force (448, 466) au moins en partie espacées axialement l'une de l'autre, et réalisées si on le souhaite sous forme de régions de disques de recouvrement, et **en ce que** l'agencement de support (434) forme au moins l'une (448) des régions de support de force.

7. Système d'entraînement selon l'une quelconque des revendications 5 ou 6, **caractérisé en ce que** le dispositif d'embrayages multiples (12) est disposé axialement à côté d'un sous-système du système d'entraînement (11) présentant le moteur électrique (400) et l'agencement d'amortisseur des oscillations de torsion (300), et s'étend de préférence sur approximativement la même plage radiale ou sur une plage radiale plus petite que ce sous-système.

8. Système d'entraînement selon l'une quelconque des revendications 5 ou 6, **caractérisé en ce que** le dispositif d'embrayages multiples (12) se situe radialement à l'intérieur de l'agencement de stator (418) et/ou de l'agencement de rotor (430) et chevauche celui-ci axialement de préférence au moins en partie.

9. Système d'entraînement selon la revendication 4, **caractérisé en ce que** l'agencement d'amortisseur des oscillations de torsion est intégré dans au moins une voie de transfert de couple entre le côté d'entrée, éventuellement le moyeu du dispositif d'embrayage (34), et au moins l'un des côtés de sortie (80, 84) du dispositif d'embrayages multiples (12).

10. Système d'entraînement selon l'une quelconque des revendications 1 à 9, **caractérisé en ce que** le dispositif d'embrayages multiples (12) est un dispositif d'embrayage humide et présente une paroi (28) limitant l'espace humide.

11. Système d'entraînement selon la revendication 10, **caractérisé en ce que** l'agencement d'éléments amortisseurs (312) de l'agencement d'amortisseur des oscillations de torsion est disposé dans la région radiale d'un ou de l'agencement d'embrayage à disques radialement extérieur (64) du dispositif d'embrayages multiples (12).

12. Procédé de montage d'un système d'entraînement selon l'une quelconque des revendications 1 à 11, dans lequel le système d'entraînement (11) présente un premier système partiel (330 ; 300 ; 434, 430) associé à une unité d'entraînement et un deuxième système partiel (12) associé à une boîte de vitesses,
**caractérisé en ce que**
pour l'incorporation du système d'entraînement dans une chaîne cinématique entre l'unité d'entraînement et la boîte de vitesses, le premier système partiel (330 ; 300 ; 434, 430) est d'abord monté en tant qu'unité prémontée sur l'unité d'entraînement, et le deuxième système partiel (12) est monté en tant qu'unité prémontée sur la boîte de vitesses, et **en ce qu'**ensuite la boîte de vitesses avec le premier système partiel monté dessus, et l'unité d'entraînement avec le deuxième système partiel monté dessus, sont assemblées en accouplant les deux systèmes partiels, le premier système partiel présentant un premier organe d'accouplement (302 ; 334) avec une denture interne et le deuxième système partiel présentant un deuxième organe d'accouplement (34) avec une denture externe (42), qui par un mouvement relatif essentiellement axial par rapport à un axe commun aux systèmes partiels, sont amenés en prise d'entraînement en rotation mutuelle pour l'accouplement des deux systèmes partiels lors de l'assemblage de la boîte de vitesses et de l'unité d'entraînement.
